# EUROPEAN PATENT APPLICATION

(11) **EP 4 852 468 A1**
(43) Date of publication of application: **09.12.2026**
(21) Application number: 24927828.4
(22) Date of filing: 08.03.2024
(51) Int. Cl.: H04W 4/08

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); LI, Haitao, Dongguan, Guangdong 523860 (CN)
(74) Representative: Penza, Giancarlo
(86) International application number: PCT/CN2024/080691
(87) International publication number: WO 2025/184886

(57) **Abstract**

The present application relates to a communication method, a device, a computer readable storage medium, a computer program product, and a computer program. The method comprises: a first device receives first information, wherein the first information is used for determining whether there is a subsequent command sent to one or more devices in a first group after the inventorying of the one or more devices in the first group is completed.

## Description

### TECHNICAL FIELD

The present disclosure relates to the field of communication, and in particular, to, communication methods, devices, a computer readable storage medium, a computer program product, and a computer program.

### BACKGROUND

In the prior art, an electronic tag in a Radio Frequency Identification (RFID) system is applied to local management and communication of articles, but the distance between the electronic tag and the reader and writer is short, thus limiting the use scenario of the electronic tag. Based on this, it is considered to design a novel electronic tag in the 3GPP network, which can be referred to as an Ambient power-enabled IoT (Ambient IoT) (hereinafter abbreviated as A-IoT or AIoT) tag or an AIoT device, and such an AIoT tag or AIoT device can communicate using frequency resources of the 3GPP network. However, how to improve the inventory efficiency for AIoT tags or AIoT devices has become a problem that needs to be solved.

### SUMMARY

Embodiments of the present disclosure provide communication methods, devices, a computer-readable storage medium, a computer program product, and a computer program.

The embodiments of the present disclosure provide a communication method. The method includes the following operation.

The first device receives the first information. The first information is used to determine whether there is subsequent command(s) to be sent to one or more devices in the first group after the one or more devices in the first group are inventoried.

The embodiments of the present disclosure provide a communication method. The method includes the following operation.

A core network device sends the first information. The first information is used to determine whether there is subsequent command(s) to be sent to one or more devices in the first group after the one or more devices in the first group are inventoried.

The embodiments of the present disclosure provide a first device. The first device includes the first communication unit.

The first communication unit is configured to receive the first information. The first information is used to determine whether there is subsequent command(s) to be sent to one or more devices in the first group after the one or more devices in the first group are inventoried.

The embodiments of the present disclosure provide a core network device. The core network device includes the second communication unit.

The second communication unit is configured to send the first information. The first information is used to determine whether there is subsequent command(s) to be sent to the one or more devices in the first group after the one or more devices in the first group are inventoried.

The embodiments of the present disclosure provide the first device. The first device includes a transceiver, a processor, and a memory. The memory is configured to store a computer program, the transceiver is configured to communicate with other devices, and the processor is configured to invoke and execute the computer program stored in the memory to cause the first device to perform the method described above.

The embodiments of the present disclosure provide a core network device. The core network device includes a transceiver, a processor, and a memory. The memory is configured to store a computer program, the transceiver is configured to communicate with other devices, and the processor is configured to invoke and execute the computer program stored in the memory to cause the core network device to perform the method described above.

The embodiments of the present disclosure provide a chip for implementing the method described above.

Specifically, the chip includes a processor for invoking and executing a computer program from a memory to cause a device on which the chip is mounted to perform the method described above.

The embodiments of the present disclosure provide a computer-readable storage medium. The computer-readable storage medium is used for storing a computer program, and when the computer program is executed by a device, the device is caused to perform the method described above.

The embodiments of the present disclosure provide a computer program product. The computer program product includes computer program instructions that cause a computer to perform the method described above.

The embodiments of the present disclosure provide a computer program that, when executed on a computer, causes the computer to perform the method described above.

By adopting the solutions provided by the present embodiments, the first device may receive the first information for determining whether there is subsequent command(s) to be sent to the one or more devices in the first group after the one or more devices in the first group are inventoried. In this way, the first device can determine, through the first information, whether a subsequent command needs to be sent to any one of the devices in the first group after the device is inventoried, so that once it is determined that there is no subsequent command that needs to be sent to a certain device after the device is inventoried, the other devices in the first group can be directly inventoried, thereby improving the inventory efficiency of the devices in the first group.

### BRIEF DESCRIPTION OF THE DRAWINGS

FIG. 1 is a schematic diagram of an application scenario according to the embodiments of the present disclosure.
FIG. 2 is a schematic diagram of the basic communication principle of an AIoT system.
FIG. 3 is a schematic diagram of a system architecture based on a 5G network.
FIG. 4 is a schematic diagram of a scenario of a direct connection manner in which an AIoT device accesses a 5G network.
FIG. 5 is a schematic diagram of a scenario of an indirect connection manner in which an AIoT device accesses a 5G network.
FIG. 6 is a schematic flowchart of a communication method according to an embodiment of the present disclosure.
FIG. 7 is a schematic flowchart of a communication method according to another embodiment of the present disclosure.
FIG. 8 is a schematic flowchart of a communication method in a direct connection manner according to an embodiment of the present disclosure.
FIG. 9 is a schematic flowchart of a communication method in an indirect connection manner according to an embodiment of the present disclosure.
FIG. 10 is a schematic flowchart of a communication method in the indirect connection manner according to another embodiment of the present disclosure.
FIG. 11 is a schematic flowchart of inventorying and command issuing processes for AIoT devices.
FIG. 12 is a schematic block diagram of the first device according to an embodiment of the present disclosure.
FIG. 13 is a schematic block diagram of a core network device according to an embodiment of the present disclosure.
FIG. 14 is a schematic block diagram of a communication device according to an embodiment of the present disclosure.
FIG. 15 is a schematic block diagram of a chip according to an embodiment of the present disclosure.
FIG. 16 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure.

The technical solutions of the embodiments of the present disclosure may be applied to various communication systems, such as a Long Term Evolution (LTE) system, an Advanced Long Term Evolution (LTE-A) system, a New Radio (NR) system, an evolved system of an NR system, an LTE-based access to unlicensed spectrum (LTE-U) system, and an NR-based access to unlicensed spectrum (NR-U) system, a Non-Terrestrial Networks (NTN) system, a Universal Mobile Telecommunication System (UMTS), Wireless Local Area Networks (WLAN), Wireless Fidelity (WiFi), 5th-Generation (5G) systems or other communication systems, etc.

Generally speaking, the conventional Communication system supports a limited number of connections and is easy to implement. However, with the development of Communication technology, the mobile Communication system will not only support conventional communication, but also support, for example, Device to Device (D2D) communication, Machine to Machine (M2M) communication, Machine Type Communication (MTC), Vehicle to Vehicle (V2V) communication, or Vehicle to everything (V2X) communication, and the like, and embodiments of the present disclosure may also be applied to these communication systems. In one possible implementation, the communication system in the embodiments of the present disclosure may be applied to a Carrier Aggregation (CA) scenario, a Dual Connectivity (DC) scenario, and a Standalone (SA) network layout scenario. In one possible implementation, the communication system in the embodiments of the present disclosure may be applied to an unlicensed spectrum. The unlicensed spectrum may also be considered as a shared spectrum. Alternatively, the communication system in the embodiments of the present disclosure may also be applied to a licensed spectrum. The licensed spectrum may also be considered as a non-shared spectrum.

The embodiments of the present disclosure have described various embodiments in connection with the network device and the terminal device. The terminal device may also be referred to as a User Equipment (UE), an access terminal, a User unit, a User station, a mobile station, a mobile stage, a remote station, a remote terminal, a mobile device, a user terminal, a terminal, a wireless communication device, a user agent, a user device, or the like. The terminal device may be a STATION (ST) in a WLAN, and may be a cellular telephone, a cordless telephone, a Session Initiation Protocol (SIP) telephone, a Wireless Local Loop (WLL) station, a Personal Digital Assistant (PDA) device, a handheld device with wireless communication capabilities, a computing device or other processing device connected to a wireless modem, an in-vehicle device, a wearable device, a terminal device in a next generation communication system such as an NR Network, or a terminal device in a future evolving Public Land Mobile Network (PLMN) Network, or the like. In the embodiments of the present disclosure, the terminal device may be deployed on land, including indoor or outdoor, handheld, wearable, or vehicle-mounted. It may also be deployed on the water surface (for example, ships, etc.). It may also be deployed in the air (for example, on aircraft, balloons and satellites, etc.). In the embodiments of the present disclosure, the terminal device may be a Mobile Phone, a tablet computer, a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, a wireless terminal device in a smart home, or the like. By way of example and not limitation, in the embodiments of the present disclosure, the terminal device may also be a wearable device. The wearable device may also be called a wearable intelligent device, which is a general term for intelligently designing and developing wearable devices, such as glasses, gloves, watches, clothing and shoes, by applying wearable technology to daily wear. A wearable device is a portable device that is worn directly on the body or integrated into a user's clothing or accessories. Wearable devices are not only hardware devices, but also realize powerful functions through software support, data interaction and cloud interaction. Generalized wearable smart devices include full functions, large sizes, complete or partial functions without relying on smart phones, such as smart watches or smart glasses, and only focus on a certain type of application functions, which need to be used in conjunction with other devices such as smart phones, such as various smart bracelets and smart jewelry for physical sign monitoring.

In the embodiments of the present disclosure, the network device may be a device for communicating with a mobile device, and the network device may be an Access Point (AP) in WLAN, a Base Transceiver Station (BTS) in GSM or CDMA, a Base Station (NodeB, NB) in WCDMA, an evolved Base Station (Evolutionary Node B, eNB or eNodeB) in LTE, or a relay Station or an Access Point, or an in-vehicle device, a wearable device, and a network device (gNB) in an NR network, or a network device in a future evolved PLMN network or a network device in an NTN network. By way of example and not limitation, in the embodiments of the present disclosure, the network device may have mobile characteristics, and for example, the network device may be a mobile device. Alternatively, the network device may be a satellite or a balloon station. For example, the satellite may be a low earth Orbit (LEO) satellite, a medium earth Orbit (MEO) satellite, a geostationary earth Orbit (GEO) satellite, a High Elliptical Orbit (HEO) satellite, or the like. Alternatively, the network device may also be a base station provided at a location such as land or water. In the embodiments of the present disclosure, the network device c provide services for the cell, and the terminal device communicates with the network device through transmission resources (for example, frequency domain resources, or frequency spectrum resources) used by the cell. The cell may be a cell corresponding to the network device (for example, a base station), and the cell may belong to a macro base station or a base station corresponding to a Small cell. The Small cells here may include: Metro cells, Micro cells, Pico cells, Femto cells, etc. These Small cells have the characteristics of Small coverage and low transmission power, and are suitable for providing high-speed data transmission services.

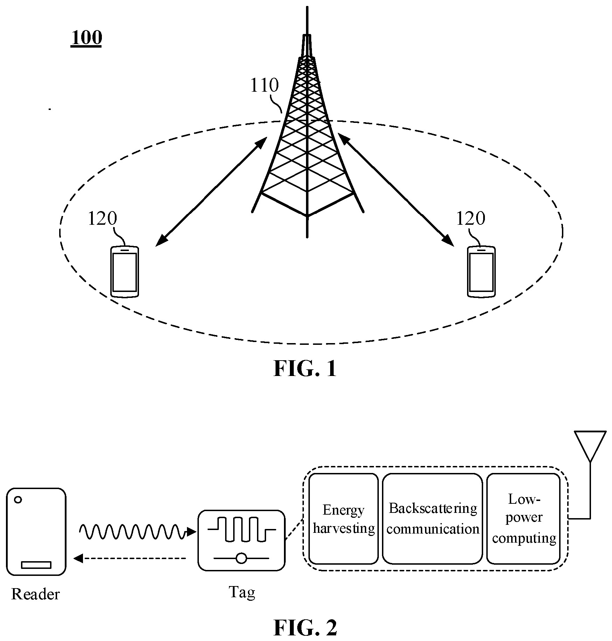

FIG. 1 illustrates exemplarily a communication system 100. The communication system includes a network device 110 and two terminal devices 120. In one possible implementation, the communication system 100 may include multiple network devices 110, and other numbers of terminal devices 120 may be included within the coverage range of each network device 110, which is not limited in the embodiments of the present disclosure. In one possible implementation, the communication system 100 may further include other network entities such as a Mobility Management Entity (MME), an Access and Mobility Management Function (AMF), and the embodiments of the present disclosure are not limited thereto. The network device may further include an access network device and a core network device. That is, the wireless communication system further includes multiple core networks for communicating with access network devices. The access network device may be an evolutional node B (eNB or e-NodeB for short), macro base station, a micro base station (also referred to as a "small base station"), a pico base station, an access point (AP), a transmission point (TP), or a new generation node B (gNodeB) in a long-term evolution (LTE) system, a next radio (NR) system, or an authorized auxiliary access long-term evolution (LAA-LTE) system. It should be understood that a device having a communication function in the network/system in the embodiments of the present disclosure may be referred to as a communication device. Taking the communication system illustrated in FIG. 1 as an example, the communication device may include a network device and a terminal device having a communication function, and the network device and the terminal device may be specific devices in the embodiments of the present disclosure, which will not be described again here. The communication device may also include other devices in the communication system, such as network controllers, mobile management entities and other network entities, which are not limited in the embodiments of the present disclosure.

In order to facilitate understanding of the embodiments of the present disclosure, the basic procedures and basic concepts involved in the embodiments of the present disclosure will be briefly described below. It should be understood that the basic procedures and basic concepts described below are not intended to limit the embodiments of the present disclosure.

Ambient IoT is a kind of wireless communication technology suitable for short distance and low rate. Ambient IoT (hereinafter referred to as A-IoT or AIoT) devices mainly combine RF energy harvesting technology, backscattering technology and low-power computing technology to realize the advantage that device nodes do not carry power supply.

The basic components of the A-IoT system are illustrated in FIG. 2, which include Reader (Tag Reader) and Tag. Tag may have functions such as energy harvesting, backscattering communication, and low-power computing. The energy harvesting is RF energy harvesting, and the core of RF energy harvesting is to convert RF energy into direct current. The energy may be stored in batteries or capacitors, or it may be directly used to drive logic circuits, digital chips or sensor devices after being harvested, so as to complete the functions and applications such as modulation and transmission of backscattering signals, collection and processing of sensing information, etc. Tag is a type of A-IoT device.

With the development of 5G system, there is a need for 5G system to support A-IoT devices to access the network in 3GPP standard. The scenarios in which the A-IoT device needs to access the network have following features: the environment is extreme, it is not suitable for work for the ordinary terminal, terminals with very low power consumption and cost are used; and battery-free terminals are used. A-IoT system may be used in wireless industrial induction network, intelligent agriculture, intelligent warehousing and logistics, smart home and other scenarios. A-IoT devices (or A-IoT terminals, or Ambient IoT terminals) may be classified into the following types based on the energy sources and usage methods of A-IoT devices:
1) Passive Ambient IoT terminal: Passive A-IoT terminal does not need built-in batteries, and when it is close to network device (such as readers and writers of RFID systems), it is in the near field range formed by antenna radiation of the network device. Therefore, the passive A-IoT terminal antenna generates induced current through electromagnetic induction, and the induced current drives the low-power chip circuit to realize the demodulation of the forward link signal and the signal modulation of the backward link. For backscatter links, passive A-IoT terminals transmit signals using backscatter implementations. It can be seen that the passive A-IoT terminal does not need a built-in battery to drive it in either the forward link or the reverse link, and it is a real Ambient IoT terminal.

Passive A-IoT terminals do not need batteries, and RF circuits and baseband circuits are very simple. For example, they do not need low noise amplifier (LNA), power amplifier (PA), crystal oscillator, ADC and other devices, so they have many advantages such as small size, light weight, very cheap price and long service life.

Features of the passive A-IoT device may further include: no battery; getting energy from the surrounding environment (e.g., radio waves, solar energy, wind energy, mechanical kinetic energy, etc.); no USIM card. It may also do certain energy storage through the surrounding environment, but the energy is very small, so the supported functional logic is much less than that of ordinary mobile phone terminals.

2) Semi-passive Ambient IoT terminal: It does not install a conventional battery itself, but may use an RF energy harvesting module to harvest radio wave energy, and stores the harvested energy in an energy storage unit (such as a capacitor). After the energy storage unit obtains energy, it can drive the low-power chip circuit to realize the demodulation of the forward link signal and the signal modulation of the backward link. For a backscatter link, a semi-passive A-IoT terminal uses a backscatter implementation for signal transmission. It can be seen that the semi-passive A-IoT terminal does not need a built-in battery to drive it in either the forward link or the reverse link. Although the energy stored by capacitors is used in work, the energy comes from the radio energy harvested by the energy harvesting module, so it is also a real Ambient IoT terminal.

Semi-passive A-IoT terminals inherit many advantages of passive A-IoT terminals, so they have many advantages such as small size, light weight, very cheap price and long service life.

3) Active Ambient IoT terminal: The Ambient IoT terminal used in some scenarios may also be an active Ambient IoT terminal, which can have a built-in battery. The battery is used to drive the low-power chip circuit of the active A-IoT terminal, and to realize the demodulation of the forward link signal and the signal modulation of the backward link. However, for backscatter links, the active A-IoT terminal uses a backscatter implementation for signal transmission. Therefore, the Ambient IoT of such terminals is mainly embodied in the fact that the signal transmission of the reverse link does not require the terminal's own power, but uses backscattering manner. Active A-IoT terminal with built-in battery supplies power to the RFID chip to increase the read-write distance of the tag and improve the reliability of communication. Therefore, it may be applied in some scenarios with relatively high requirement for communication distance and reading delay. Here, the A-IoT terminal may be a Tag, a general device, or the like.

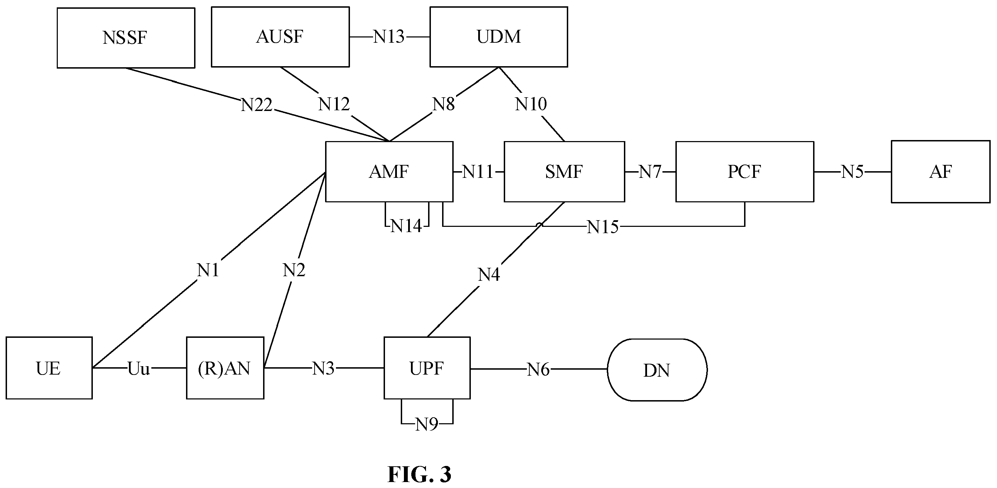

The 5G network system architecture diagram is illustrated in FIG. 3. Specifically, Network Slice Selection Function (NSSF) is mainly used for the management of Network slice-related information, such as selecting Network slices for terminal devices. Authentication Server Function (AUSF) is used to complete the identity Authentication Function for the user access. Unified Data Management (UDM) is used to manage and store contract data and authentication data. Access and Mobility Management Function (AMF) is used to complete mobility management, security anchor point, security UE policy management, and the like. Session Management Function (SMF) is used to complete session management, UE IP address allocation and management, etc. Policy Control Function (PCF) is responsible for formulating policies related to mobility management, session management, charging, etc. for the UE. Application Function (AF) is used for an external Application server. User Plane Function (UPF) is used to handle User Plane processing, etc. Data Network (DN) is a 5GC external Data Network (such as the Internet, etc.). Data transmission is performed between nodes of the 5GC (5G core Network), between UE and nodes of the 5GC, between UE and Radio Access Network (R) AN, and between RAN and nodes of the 5GC through corresponding interfaces, respectively. As illustrated in FIG. 3, data transmission is performed between the AMF and the NSSF in the 5GC through the interface N22. The AMF transmits data with the SMF through the interface N11. The AMF transmits data with the AUSF through the N12. Data transmission is performed between AMF and UDM through N8 interface. Data transmission is performed between SMF and UPF through the N4 interface. The UPF transmits data to the external data network through the N6 interface and transmits data to the AN through the N3 interface. The UE performs access layer connection with the AN through the Uu interface to exchange access layer messages and wireless data transmission, and the UE performs Non-access stratum (NAS) connection with the AMF through the N1 interface to exchange NAS messages. Data transmission is performed between RAN and AMF through N2 interface, and data transmission is performed between RAN and UPF through N3 interface. It should be understood that only some interfaces between nodes have been described above, and other interfaces between other nodes of the 5GC will not be described in detail in FIG. 3.

In the Radio Frequency Identification (RFID) system, the Reader is a device that reads out the information in an electronic Tag (Tag for short) or writes the information into an electronic Tag. When the RFID system works, the Reader sends Radio Frequency energy in an area to form an electromagnetic field, and the size of the area depends on the transmitting power. After the electronic tag in the coverage area of the reader/writer is triggered, the electronic tag sends the data stored therein or modifies the data stored therein according to the command of the reader/writer. The reader/writer performs non-contact bidirectional data communication with the electronic tag through wireless radio frequency mode, and reads and writes for the electronic tag, so as to achieve the purpose of identifying the target and exchanging data. Electronic tags generally consume less power, and even do not need to be connected to a power supply or battery. For example, passive electronic tags can briefly supply power to themselves by receiving microwave signals transmitted by the reader/writer and obtaining energy through electromagnetic induction coils, thus completing information exchange. RFID has a short transmission range, and is applied to local management and communication of articles, such as article management or Inventory in warehouses, file management, door card management, expressway electronic toll payment, etc.

In the prior art, the electronic tag in the Radio Frequency Identification (RFID) system is applied to local management and communication of articles, and the distance between the passive electronic tag and the reader/writer is generally about 1 meter, and the distance between the active electronic tag and the reader/writer is about 100 meters. Therefore, it is inconvenient to read, write or inventory electronic tags remotely, which limits the use scenario of electronic tags.

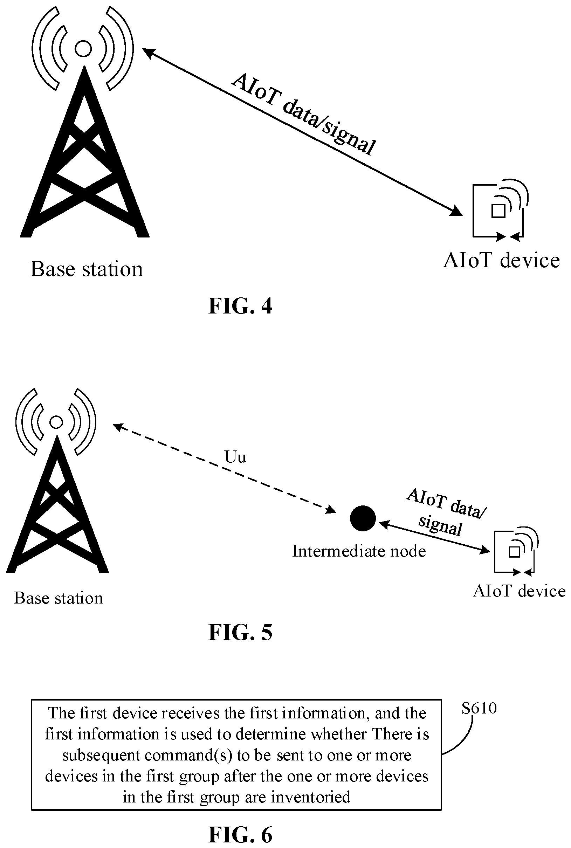

Based on this, a new type of electronic tag is considered to be designed in the 3GPP network, which is called Passive IoT tag or Ambient IoT tag (or AIoT device). Unlike RFID, this Passive IoT tag or Ambient IoT tag (or AIoT device) can communicate using the frequency resources of the 3GPP network. As illustrated in FIG. 4 and FIG. 5, several different access methods are presented in 3GPP TR 38.848 for Ambient IoT (AIoT device) to access a 5G network, including: the direct connection manner illustrated in FIG. 4 and the indirect connection manner illustrated in FIG. 5. In the direct connection manner (or direct connection mode) illustrated in FIG. 4, the AIoT device and the base station can directly transmit AIoT data/signals; In the indirect connection manner (or indirect connection mode) illustrated in FIG. 5, an AIoT device accesses a base station of a wireless network through an intermediate node (the intermediate node may be UE), and data transmission between the intermediate node and the base station is performed through a Uu interface. Compared with the direct connection manner, the indirect connection manner has the following advantages: it can reduce the impact on the existing 3GPP and it can extend coverage range.

However, in the RFID system, the Command service can only be performed after the current Tag Inventory is completed. Specifically, in the RFID system, the Reader can only perform the next time of inventory after the Reader completes the inventory and command for a Tag, which is very inefficient. If the serial processing of RFID system is still used in 3GPP cellular system, it will lead to the problem of low efficiency. Therefore, how to improve the inventory efficiency in 3GPP system becomes a problem that needs to be solved.

It is to be understood that the terms "system" and "network" are often used interchangeably herein. The term "and/or" herein is merely used for describing an association relationship between associated objects, and indicates that there may be three relationships, for example, A and/or B, which may indicate that A exists alone, both A and B exists, and B exists alone. In addition, the character "/" herein generally indicates that the associated objects are in an "or" relationship. It should be understood that the "indication" mentioned in the embodiments of the present disclosure may be a direct indication, an indirect indication, or an indication that there is an association relationship. For example, A indicates B, which may mean that A directly indicates B, e.g., B may be acquired by A. It may also be indicated that A indirectly indicates B, for example, A indicates C, and B may be acquired by C. It may also be indicated that there is an association relationship between A and B. In the description of the embodiments of the present disclosure, the term "correspondence" may mean that there is a direct correspondence or an indirect correspondence between the two objects, or may mean that there is a correlation between the two objects, or may be a relationship between instruction and being instructed, configuration and being configured, or the like.

In order to facilitate understanding of the technical solutions of the embodiments of the present disclosure, the related technologies of the embodiments of the present disclosure will be described below, and the following related technologies may be arbitrarily combined with the technical solutions of the embodiments of the present disclosure as optional schemes, and all of them belong to the protection scope of the embodiments of the present disclosure.

FIG. 6 is a schematic flowchart of a communication method according to an embodiment of the present disclosure. The method includes at least a part of the following contents.

In operation S610, the first device receives the first information. The first information is used to determine whether there is subsequent command(s) to be sent to one or more devices in the first group after the one or more devices in the first group are inventoried.

The processing performed by the first device may include the following operations. The first device receives the first information. The first device sends one or more inventory messages. After the first device receives an access message carrying the identifier of the second device from the second device in the first group (i.e., any one device in the first group), the first device sends (for example, sending to the core network device) the identifier of the second device to inventory the second device. In a case that that the first device determines that there is no a subsequent command that needs to be sent to the second device after the second device is inventoried, the first device continues to send an inventory message to inventory other devices in the first group. In this way, it is possible to avoid the problem of low inventory efficiency caused by the first device continuing to send inventory messages to inventory other devices in the group in a case that the first device does not receive a subsequent command for the second device after waiting for a period of time, and the inventory efficiency of the devices in the group can be improved by adopting the communication method provided in the present embodiment.

The command may include a read command and/or a write command.

The read command may include description information of specific content that needs to be read from the device. Exemplarily, the read command may include reading description information of at least one of following: a content of a specified period, a content of a specified type, a content of a specified service, or the like from the device.

The write command may include specific content that needs to be written to the device. The specific content that needs to be written to the device may be determined by the AF. In some possible examples, the write command may indicate a specified memory of the writing device, or the like, in addition to the specific content written to the device, which is not limited here.

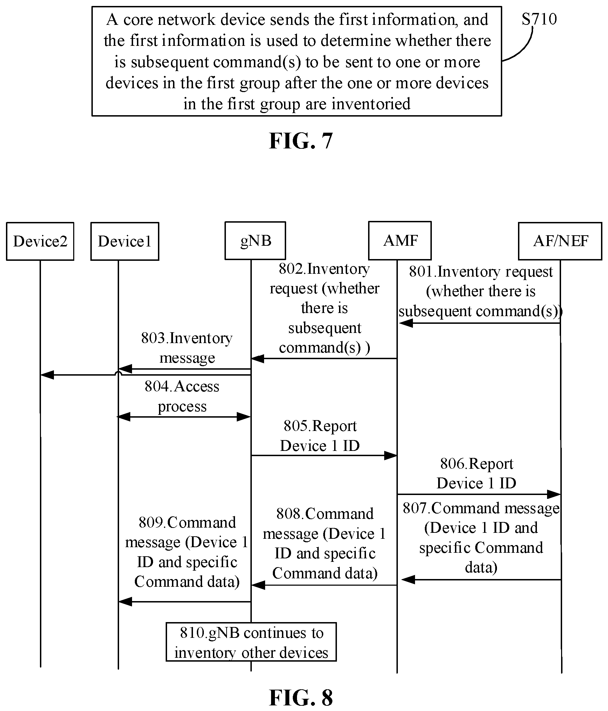

FIG. 7 is a schematic flowchart of a communication method according to another embodiment of the present disclosure. The method includes at least a part of the following contents.

In operation S710, the core network device sends the first information. The first information is used to determine whether there is subsequent command(s) to be sent to one or more devices in the first group after the one or more devices in the first group are inventoried.

Here, the first group may also be referred to as a first AIoT group. Each of the one or more devices in the first group is an AIoT device. In some possible examples, the AIoT device may also be replaced with any one of an IoT device, a zero power device, a low power device, an RFID tag, a Passive IoT tag, and an AIoT tag, which are not exhaustive here.

The first device may be one of the second access network device or a terminal.

The second access network device may be an access network device serving one or more AIoT devices and/or the second device in the first group.

The terminal may be an intermediate device or a proxy device or a relay device of one or more AIoT devices and/or the second device in the first group, that is, one or more AIoT devices and/or the second device in the first group can interact with devices on the network side through the terminal. In some possible examples, the terminal may also be referred to as any one of an Intermediate Node, a proxy UE, an Intermediate UE, a relay device, an Intermediate device, a proxy device, and the like.

The core network device may be a control plane network element, such as an AMF.

In some possible implementations, before the core network device sends the first information, the method may further include: the core network device receives the first information sent by the application server.

Here, the core network device receiving the first information sent by the application server may include: the core network device receiving the first message sent by the application server, and the first message carries the first information.

Specifically, the core network device receiving the first message sent by the application server may include one of the following: the core network device directly receiving the first message sent by the application server; or the core network device receiving the first message sent by the application server through a Network Exposure Function (NEF).

The application server may be an AF, and the trigger condition for the AF to send the first message and the manner in which the AF generates the first message are not limited in this embodiment.

The first message may carry other contents in addition to the first information, and may carry, for example, a request or an instruction for inventorying the first group, and the like, but this embodiment is not limited thereto. In some possible examples, this first message may be referred to as an Inventory request message.

In some possible implementations, the core network device sending the first information includes: the core network device sending the first information to the first device. Accordingly, the first device receiving the first information includes: the first device receiving the first information sent by the core network device.

In one embodiment, each AIoT device in the first group accesses the network in a direct connection manner (or mode). The first device may be the second access network device.

The core network device sending the first information to the first device may be as follows: the core network device sending the first information to the second access network device. Accordingly, the first device receiving the first information sent by the core network device includes: the second access network device receiving the first information sent by the core network device.

The core network device sending the first information to the second access network device may include: the core network device sending the second message to the second access network device. The second message carries the first information. Accordingly, the second access network device receiving the first information sent by the core network device may include: the second access network device receiving the second message sent by the core network device.

The core network device may generate the second message by extracting the first information from the first message and adding the first information to the second message.

In some possible examples, position information corresponding to the first group may be carried in the first message. The position information includes at least one of: information related to a Tracking Area (TA), information related to a cell, and a geographic position.

The information related to the TA may include information related to one or more TAs. The information related to any one TA may include at least one of a Tracking area code (TAC) corresponding to the TA and a TA Identity (TAI) corresponding to the TA.

The information related to the cell may include information related to one or more cells. The information related to any one cell may be an identifier of the cell. The identifier of the cell may be expressed as a Cell ID, or the identifier corresponding to the cell may be a Physical Cell Identifier (PCI).

The geographic position may include one or more geographic area ranges. The one or more geographic area ranges may be represented by coordinates of the one or more geographic area ranges. The coordinates of any one of the geographic area ranges may be coordinates of a center point of the geographic area range and/or coordinates of one or more boundary positions of the geographic area range, or the like. Any one of the coordinates may be represented by GPS coordinates.

Accordingly, the manner in which the core network device determines the second access network device may include one of the following.

In a case that the position information corresponding to the first group is the information related to the TA corresponding to the first group, the core network device determines an access network device in the same TA as the first group as the second access network device based on the information related to the TA corresponding to the first group.

In a case that the position information corresponding to the first group is information related to a cell corresponding to the first group, the core network device determines an access network device corresponding to a cell in which the first group is located as the second access network device based on the information related to the cell corresponding to the first group.

In a case that the position information corresponding to the first group is a geographic position corresponding to the first group, the core network device determines information related to the TA corresponding to the first group based on the geographic position corresponding to the first group, and the core network device determines an access network device in the same TA as the first group as the second access network device based on the information related to the TA corresponding to the first group;

In a case that the position information corresponding to the first group is a geographic position corresponding to the first group, the core network device determines information related to a cell corresponding to the first group based on the geographic position corresponding to the first group, and the core network device determines an access network device corresponding to a cell in which the first group is located as the second access network device based on the information related to the cell corresponding to the first group.

Alternatively, the core network device determining the access network device in the same TA as the first group as the second access network device based on the information related to the TA corresponding to the first group may include: the core network device determining one or more access network devices in the same TA as the first group based on the information related to the TA corresponding to the first group; and determining one access network device as the second access network device from one or more access network devices in the same TA as the first group. The determining one access network device as the second access network device from one or more access network devices in the same TA as the first group may refer to one of the following: in a case that there is one access network device in the same TA as the first group, the access network device being taken as the second access network device; or in a case that there are multiple access network devices in the same TA as the first group, arbitrarily selecting one access network device as the second access network device from the multiple access network devices.

Alternatively, the core network device determining an access network device corresponding to a cell in which the first group is located as the second access network device based on information related to a cell corresponding to the first group may include: the core network device determining one or more access network devices covering a cell in which the first group is located based on information related to the cell corresponding to the first group; and determining one access network device as the second access network device from one or more access network devices covering the cell in which the first group is located. The determining one access network device as the second access network device from one or more access network devices covering the cell in which the first group is located may refer to one of the following: in a case that there is one access network device covering the cell in which the first group is located, the access network device being taken as the second access network device; or in a case that there are multiple access network devices covering the cell in which the first group is located, arbitrarily selecting one access network device as the second access network device from the multiple access network devices.

In one embodiment, each AIoT device in the first group accesses the network in an indirect manner (or mode). The first device may be a terminal.

The core network device sending the first information to the first device may include: the core network device sending the third message to the terminal. The third message carries the first information. Accordingly, the first device receiving the first information sent by the core network device includes: the terminal receiving the third message sent by the core network device.

The core network device may generate the third message by extracting the first information from the first message and adding the first information to the third message. In the present embodiment, the message type of the third message may be a Non Access Stratum (NAS) message. It should be understood that in this case, the third message may also be transmitted through the access network device corresponding to the first device (for example, it may be transmitted transparently), and for convenience of distinction, the access network device corresponding to the first device, that is, the terminal, in this scenario is referred to as the third access network device.

In some possible examples, position information corresponding to the first group may be carried in the first message. Accordingly, the manner of determining the terminal by the core network device may include one of the following. In a case that the position information corresponding to the first group is the information related to the TA corresponding to the first group, the core network device selects a terminal in the same TA as the first group based on the information related to the TA corresponding to the first group. In a case that the position information corresponding to the first group is information related to the cell corresponding to the first group, the core network device selects a terminal in the cell in which the first group is located based on the information related to the cell corresponding to the first group. In a case that the position information corresponding to the first group is a geographic position corresponding to the first group, the core network device determines information related to the TA corresponding to the first group based on the geographic position corresponding to the first group, and the core network device selects a terminal in the same TA as the first group based on the information related to the TA corresponding to the first group. In a case that the position information corresponding to the first group is a geographic position corresponding to the first group, the core network device determines information related to the cell corresponding to the first group based on the geographic position corresponding to the first group, and the core network device selects a terminal in a cell in which the first group is located based on the information related to the cell corresponding to the first group.

The core network device selecting a terminal in the same TA as the first group based on the information related to the TA corresponding to the first group may include: the core network device determining one or more candidate terminals having the first capability in the same TA as the first group based on the information related to the TA corresponding to the first group; and selecting a terminal from one or more candidate terminals having the first capability in the same TA as the first group. Here, the first capability may refer to a capability that can act as an intermediate device, a proxy device, or a relay device of one or more AIoT devices. It should be pointed out that the capability possessed by any one candidate terminal may be reported to the core network device in advance, and the manner in which any one candidate terminal reports its own capability is not limited in this embodiment.

Selecting a terminal from one or more candidate terminals having the first capability in the same TA as the first group may include one of following: in a case that there is only one candidate terminal having the first capability in the same TA as the first group, the candidate terminal being taken as the terminal; or in a case that there are multiple candidate terminals having the first capability in the same TA as the first group, arbitrarily selecting one of the multiple candidate terminals as the terminal.

The core network device selecting a terminal in a cell in which the first group is located based on information related to the cell corresponding to the first group may include: the core network device determining one or more candidate terminals having the first capability in the cell in which the first group is located based on information related to the cell corresponding to the first group; and selecting a terminal from one or more candidate terminals having the first capability in the cell in which the first group is located. The selecting a terminal from one or more candidate terminals having the first capability in the cell in which the first group is located may include one of the following: in a case that there is only one candidate terminal having the first capability in the cell in which the first group is located, the candidate terminal being taken as the terminal; or in a case that there are multiple candidate terminals having the first capability in the cell in which the first group is located, arbitrarily selecting one of the multiple candidate terminals as the terminal.

In some possible implementations, the core network device sending the first information includes: the core network device sending the first information to the first access network device. The processing of the first access network device may include: the first access network device receiving the first information sent by the core network device; and sending the first information to the first device. The first device receiving the first information includes: the first device receiving the first information sent by the first access network device.

The present embodiment is particularly applicable to a scenario in which each AIoT device in the first group accesses the network in an indirect connection manner (or mode), and in the present embodiment, the first device may be a terminal.

The first device receiving the first information sent by the first access network device may include: the first device receiving the fourth message sent by the first access network device. The fourth message carries the first information. The fourth message may be an Access stratum (AS) message.

The manner in which the core network device determines the first access network device is similar to the manner in which the core network device determines the second access network device in the foregoing embodiment, and will not be repeated.

The first access network device may select a terminal that is a first device, and the first access network device may select a terminal in one of the following manners. In a case that the first access network device manages only one candidate terminal having the first capability, the first access network device selects the candidate terminal as the terminal (that is, the first device). Alternatively, in a case that the first access network device manages multiple candidate terminal having the first capability, the first access network device selects any one of the multiple candidate terminals as the terminal (that is, the first device).

In some possible implementations, the first information includes related identifier(s) of the first group.

The related identifier(s) of the first group includes at least one of the following: a Device ID mask of the first group, a group identifier of the first group, a group session identifier of the first group, a group service identifier of the first group, a slice identifier corresponding to the first group, or a Data Network Name (DNN) corresponding to the first group.

The Device ID mask of the first group may be the first K consecutive identical bit(s) of the identifiers of all of one or more AIoT devices included in the first group. K may be an integer greater than or equal to 1, the value of K should be less than the length of the identifiers of respective AIoT devices, and K is equal to the length of consecutive identical bits of the identifiers of various AIoT devices in the first group. For example, the length of the identifiers (ID) of respective AIoT devices in the first group is 20 bits, the first 10 bits of the IDs of respective AIoT devices are the same, then K may be equal to 10, and the Device ID mask of the first group is the first 10 consecutive identical bits of the ID of each AIoT device. It should be noted that this is only an example, and in actual processing, since the numbers of the identical bits of the IDs of all AIoT devices included in different groups may be different, the lengths and contents of the Device ID masks of different groups may be different, and various possible cases are not limited or exhaustive here.

The group identifier of the first group may be represented as the Group ID of the first Group.

The group session identifier of the first group may be represented as the Group Session ID of the first Group.

The group service identifier of the first group may be represented as the Group Service ID of the first Group.

The slice identifier may refer to the identifier of the network slice. For example, the network slice identifier may be Single Network Slice Selection Assistance Information (S-NSSAI). Accordingly, the slice identifier corresponding to the first group may be the S-NSSAI corresponding to the first group.

Alternatively, the first information further includes at least one of the following: the first indication, identifier(s) of at least a part of the one or more devices in the first group; one or more second indications; or the first command, or one or more second commands.

The first indication is used to indicate whether there is subsequent command(s) to be sent to the one or more devices in the first group after one or more devices in the first group are inventoried.

Different second indications of the one or more second indications correspond to identifiers of different devices in the first group, and each second of the one or more second indications is used to indicate whether there is a subsequent command to be sent to a corresponding device in the first group after the corresponding device in the first group is inventoried.

The first command is the subsequent command(s) to be sent to the one or more devices in the first group after the one or more devices in the first group are inventoried.

Different second commands of the one or more second commands correspond to the identifiers of different devices in the first group, and each of the one or more second commands is a subsequent command to be sent to a corresponding device in the first group after the corresponding device in the first group is inventoried.

The first indication may be specifically used to indicate one of the following: there is subsequent command(s) to be respectively sent to all device(s) in the first group after all device(s) in the first group are respectively inventoried; or there is no subsequent command(s) to be respectively sent to all the device(s) in the first group after all the device(s) in the first group are respectively inventoried.

The first indication is an overall indication for the first group. That is, if the first indication is used to indicate that there is no the subsequent command(s) to be respectively sent to all the device(s) in the first group after all the device(s) in the first group are respectively inventoried, it means that there is no the subsequent command(s) after all the devices in the first group are inventoried, and if the first indication is used to indicate that there is the subsequent command(s) to be respectively sent to all device(s) in the first group after all the device(s) in the first group are respectively inventoried, it means that the subsequent command(s) needs to be sent to each device after each device in the first group is inventoried.

The identifier(s) of at least a part of the one or more devices in the first group may be an identifier of each of the one or more devices in the first group, or an identifier of each of a part of the one or more devices in the first group.

Any one of the one or more second indications may be bound to or associated with or correspond to an identifier of each device in at least a part of the device(s) in the first group, and a different second indications may be bound to or associated with or correspond to identifiers of different devices in the first group.

Any one of the second indications may be used to indicate one of following: there is a subsequent command to be sent to a corresponding device in the first group after the device is inventoried; or, there is no a subsequent command to be sent to a corresponding device in the first group after the device is inventoried.

Further, the first group may include M devices, the number of the second indications may be N, both N and M are positive integers, and N may be less than or equal to M.

In one possible example, the number N of the second indications may be equal to 2. That is, there are only two second indications, and the contents of the two second indications are different. For example, the first one of the two second indications is used to indicate that there is subsequent command(s) to be sent to the corresponding device(s) in the first group after the device(s) is inventoried, and the second one of the two second indications is used to indicate that there is on subsequent command(s) to be sent to the corresponding device(s) in the first group after device(s) is inventoried.

In such an example, different second indications of the two second indications are bound to or associated with or correspond to identifiers of different devices in the first group. The sum of the numbers of devices in the first group to which the two second indications are bound to or associated with or correspond may be equal to M.

For example, the first group includes three AIoT devices, i.e., an AIoT device 1, an AIoT device 2, and an AIoT device 3. The two second indications are the second indication 1 and the second indication 2, respectively. The second indication 1 is used to indicate that there is a subsequent command to be sent to a corresponding device in the first group after the device is inventoried, and the second indication 2 is used to indicate that there is no subsequent commands to be sent to corresponding devices in the first group after devices are inventoried. The second indication 1 is bound or associated with or corresponds to the identifier of the AIoT device 1 in the first group. That is, the second indication 1 is used to indicate that there is a subsequent command to be sent to the AIoT device 1 in the first group after the AIoT device 1 is inventoried. The second indication 2 is bound or associated with or corresponds to the identifier of the AIoT device 2 and the identifier of the AIoT device 3 in the first group. That is, the second indication 2 is used to indicate that there are no subsequent commands to be sent to the AIoT device 2 and the AIoT device 3 in the first group after the AIoT device 2 and the AIoT device 3 are inventoried.

In yet another possible example, the number N of the second indications may be equal to M. That is, there is a corresponding second indication for each device in the first group. In such an example, each second indication is bound or associated with or corresponds to an identifier of one device in the first group, and different second indications are bound or associated with or correspond to identifiers of different devices in the first group.

For example, the first group includes three AIoT devices, i.e., an AIoT device 1, an AIoT device 2, and an AIoT device 3. The three second instructions are the second indication 1, the second indication 2, and the second indication3. The second indication 1 is used to indicate that there is a subsequent command to be sent to a corresponding device in the first group after the device is inventoried, and the second indication 2 and the second indication 3 are both used to indicate that there are no subsequent commands to be sent to the corresponding devices in the first group after devices are inventoried. The second indication 1 is bound or associated with or corresponds to the identifier of the AIoT device 1 in the first group. That is, the second indication 1 is used to indicate that there is a subsequent command to be sent to the AIoT device 1 in the first group after the AIoT device 1 is inventoried. The second indication 2 is bound or associated with or corresponds to the identifier of the AIoT device 2 in the first group. That is, the second indication 2 is used to indicate that there is no a subsequent command to be sent to the AIoT device 2 in the first group after the AIoT device 2 is inventoried. The second indication 3 is bound or associated with or corresponds to the identifier of the AIoT device 3 in the first group. That is, the second indication 3 is used to indicate there is no a subsequent command to be sent to the AIoT device 3 in the first group after the AIoT device 3 is inventoried.

The first command may be a subsequent command to be sent to each of the one or more devices in the first group after each of the one or more devices in the first group is inventoried. That is, the first command is the same subsequent command for each device in the first group.

The first command may include the first read command and/or the first write command. Here, the first read command may include description information of specific content that needs to be read from the AIoT device. For example, the first read command may include reading at least one of following: a content of a specified period, a content of a specified type, a content of a specified service, or the like from the AIoT device. The first write command may include specific content that needs to be written to the AIoT device, an the specific content that needs to be written to the AIoT device may be determined by the AF, but is not limited here.

Any one of the one or more second commands may be bound or associated with or correspond to an identifier of each of at least a part of the devices in the first group, and different second commands may be bound or associated with or correspond to identifiers of different devices in the first group.

Further, the first group may include M devices, the number of the second commands may be L, both L and M are positive integers, and L may be less than or equal to M.

The number of identifiers of devices in the first group to which each of the L second commands may be bound or associated with or correspond may be one or more. Different second commands of the L second commands are bound to or associated with or correspond to the identifiers of different devices in the first group. The sum of the numbers of devices in the first group to which the L second commands are bound to or associated with or correspond to may be less than or equal to M. The second commands corresponding to different devices in the first group may be the same or different. Any one of the second commands may include the second read command and/or the second write command. The description related to the second read command and the second write command is similar to the first read command and the first write command in the foregoing embodiment, and the description thereof will not be repeated.

For example, the first group includes three AIoT devices, i.e., an AIoT device 1, an AIoT device 2, and an AIoT device 3. The two second commands are the second command 1 and the second command 2, respectively. The second command 1 is bound to or associated with or corresponds to the identifier of the AIoT device 1 in the first group. That is, the second command 1 is a subsequent command that needs to be sent to the AIoT device 1 in the first group after the AIoT device 1 is inventoried. The second command 2 is bound to or associated with or corresponds to the identifier of the AIoT device 2 and the identifier of the AIoT device 3 in the first group. That is, the second command 2 is the same subsequent command that needs to be sent to the AIoT device 2 and the AIoT device 3 in the first group respectively after the AIoT device 2 and the AIoT device 3 are inventoried.

In some possible implementations, after the first device receives the first information, the method further includes the following operation. The first device sends one or more inventory messages. The one or more inventory messages are used to inventory one or more devices in the first group.

The first inventory message of the one or more inventory messages carries related identifier(s) of the first group and/or a count-related value, and the count-related value is used to determine access opportunity (opportunities) for one or more devices in the first group.

The first inventory message may be the first one of one or more inventory messages. The manner in which the first device generates the first inventory message may be that the first device extracts the related identifier(s) of the first group from the first information, the first device determines a count-related value; and the related identifier(s) of the first group and the count-related value are added to the first inventory message.

The count-related value may be expressed as a Q value, and its value may be a positive number or a positive integer.

Alternatively, the manner in which the first device determines the count-related value may be that the first device locally generates the count-related value. The method of generating the count-related value is not limited in this embodiment.

Alternatively, the manner in which the first device determines the count-related value may be that the first device receives the count-related value. This manner is particularly suitable for a scenario in which the first device is a terminal and the first device receives the first information from the first access network device, in which the first access network device may generate a count-related value after receiving the first information sent by the core network device, both the count-related value and the first information are carried in the fourth message and send to the terminal, and accordingly, the terminal receives the fourth message carrying the first information and the count-related value.

It should be noted that among the one or more inventory messages, other remaining inventory messages other than the first inventory message may carry the related identifier(s) of the first group and/or the count-related value, or other remaining inventory messages may also carry other contents, and the present embodiment does not limit or exhaustively enumerate the contents carried by other inventory messages other than the first inventory message.

The one or more inventory messages may be broadcast message(s). The time intervals between adjacent inventory messages of the one or more inventory messages may be the same or different. In one possible example, the one or more inventory messages may be sent periodically, that is, the time intervals between adjacent inventory messages are the same.

In one embodiment, taking any one AIoT device as the second device as an example, the process after the second device receives the first inventory message may include: the second device determines whether the related identifier of the group to which the second device belongs is consistent with the related identifier of the first group in the first inventory message, and if the related identifier of the group to which the second device belongs is consistent with the related identifier of the first group in the first inventory message, the second device extracts a count-related value from the first inventory message, and the second device obtains an access count initial value by calculating based on the count-related value.

In addition, the processing after the second device receives the first inventory message may further include: if the related identifier of the group to which the second device belongs is inconsistent with the related identifier of the first group in the first inventory message, the second device does not perform the processing.

After the second device obtains the access count initial value by calculating based on the count-related value, the method may further include the following operations. In a case that the second device receives the new inventory message, the second device subtracts the current access count value by one to obtain the updated access count value. The second device determines whether the updated access count value is equal to the specified value, and if the updated access count value is equal to the specified value, the second device sends an access message to the first device. The access message carries the identifier of the second device.

In addition, after the second device obtains the access count initial value by calculating based on the count-related value, the method may further include the following operations. If the updated access count value is not equal to the specified value, the second device continues to detect whether a new inventory message is received, and in a case that the new inventory message is received, the second device subtracts the current access count value by one to obtain the updated access count value.

Here, if the related identifier of the group to which the second device belongs is consistent with the related identifier of the first group in the first inventory message, it is determined that the second device belongs to the first group, and otherwise, it may be determined that the second device does not belong to the first group.

In the second device, the related identifier of the group to which it belongs may be pre-configured, for example, it may be pre-written to the second device. Alternatively, the related identifier of the group to which the second device belongs may be received by the second device from another device and stored locally. This embodiment does not limit the manner in which the second device acquires the related identifier of the group to which it belongs.

The second device obtains the access count initial value by calculating based on the count-related value, which may be as follows: the second device obtains the maximum value of the access count by calculating based on the count-related value; arbitrarily selects a random number from 0 to the maximum value of access count, and takes the random number as the access count initial value. The access count initial value may be a positive integer. For example, taking the count-related value expressed as Q as an example, obtaining the maximum value of the access count by calculating based on the count-related value may be: obtaining the maximum value of the access count by calculating 2 to the power of Q.

The new inventory message may refer to a message other than the first inventory message. The current access count value may be equal to the access count initial value or the last updated access count value. For example, when the second device receives the inventory information for the first time after the first inventory information, the current access count value is equal to the access count initial value. When the second device receives the inventory information other than the first inventory message for multiple times, the current access count value is equal to the last updated access count value.

The specified value may be configured according to the actual situation, for example, may be 0, or may be another value, which is not limited or exhaustive here.

In some possible implementations, after the first device sends one or more inventory messages, the method further includes the following operation. The first device receives an access message sent by the second device. The access message carries an identifier of the second device. The second device is one of one or more devices in the first group. The first device sends the identifier of the second device.

Here, in the process of sending one or more inventory messages by the first device, it is also necessary to perform a process of detecting whether an access message sent by any one of the devices in the first group is received. Specifically, after the first device sends one or more inventory messages, the first device receives the access message sent by the second device and the first device sends the identifier of the second device, which may mean that after the first device sends the i-th inventory message, the first device detects whether the access message sent by any one of the devices in the first group is received, if not, the first device continues to send the (i+1)-th inventory message, and again performs the process of detecting whether the access message sent by any one of the devices in the first group is received, and so on, until the access message from a certain device (such as the second device) in the first group is received after sending any one inventory message, the sending of the inventory message is suspended, and the first device sends the identifier of the second device.

After the core network device sends the first information, the method further includes the following operation. The core network device receives the identifier of the second device. The second device is one of one or more devices in the first group. The core network device sends the identifier of the second device to the application server.

Alternatively, the first device is the second access network device or a terminal. The first device sends the identifier of the second device, which may be that the first device sends the identifier of the second device to the core network device. The core network device receives the identifier of the second device, which may be that the core network device receives the identifier of the second device sent by the first device. It should be noted that in the case that the first device is a terminal, the identifier of the second device may be carried by a NAS message, such as an uplink NAS message.

Alternatively, the first device is a terminal. The first device sends the identifier of the second device, which may be that the first device sends the identifier of the second device to the first access network device. The processing of the first access network device may include the following operations. The first access network device receives the identifier of the second device sent by the terminal, and sends the identifier of the second device to the core network device. Accordingly, the core network device receives the identifier of the second device, which may be that the core network device receives the identifier of the second device sent by the first access network device. It should be noted that in this case, the identifier of the second device may be carried by an AS message, such AS an uplink AS message.

After the application server receives the identifier of the second device from the core network device, the application server may complete the inventorying of the second device.

In some possible implementations, after the first device receives the access message sent by the second device, the method further includes one of: in a case that it is determined based on the first information that there is no subsequent command after the second device is inventoried, and the inventory of the devices in the first group is not completed, the first device continues to send one or more inventory messages; or in a case that it is determined based on the first information that there is a subsequent command after the second device is inventoried, the first device sends a command corresponding to the second device to the second device.

Related description of what may be included in the first information has been described in detail in the foregoing embodiment, and description will not be repeated here.

Specifically, the processing after the first device receives the access message sent by the second device may be:
the first device determines whether there is a subsequent command after the second device is inventoried based on the first information;
if it is determined that there is no subsequent command after the second device is inventoried, whether the inventory of the devices in the first group is completed is determined; if it is determined that the inventory of the devices in the first group is completed, the processing is terminated, and if the inventory of the devices in the first group is not completed, the first device continues to send one or more counting messages;
if it is determined that there is a subsequent command after the second device is inventoried, the first device sends a command corresponding to the second device to the second device.

Here, the processing opportunity for the first device to determine, based on the first information, whether there is a subsequent command after the second device is inventoried may be before the first device sends the identifier of the second device, may be after the first device sends the identifier of the second device, or may be simultaneously with the first device sending the identifier of the second device.

In one example, the first information includes related identifier(s) of the first group, and further includes at least one of the following: the first indication, identifier(s) of at least a part of the one or more devices in the first group, or one or more second indications. Different second indications of the one or more second indications correspond to identifier(s) of different devices.

Alternatively, the first information includes related identifier(s) of the first group and the first indication. The first device determines, based on the first information, whether there is a subsequent command after the second device is inventoried, which may be that the first device determines, based on the first indication in the first information, whether there is a subsequent command after the second device is inventoried.

Specifically, the method further includes one of following: in a case that the first indication in the first information is used to indicate that there is a subsequent command to be sent to one or more devices in the first group after one or more devices in the first group are inventoried, the first device determines that there is a subsequent command after the second device is inventoried; or in a case that the first indication in the first information is used to indicate that there are no subsequent commands to be sent to one or more devices in the first group after one or more devices in the first group are inventoried, the first device determines that there is no subsequent command after the second device is inventoried.

Alternatively, the first information includes related identifier(s) of the first group, identifier(s) of at least a part of the one or more devices in the first group, and one or more second indications. The first device determines, based on the first information, whether there is a subsequent command after the second device is inventoried, which may be that the first device determines, based on the identifier of the second device, the identifier(s) of at least a part of devices in the first information and one or more second indications, whether there is a subsequent command after the second device is inventoried

The method further includes one of the following: in a case that the first information includes the second indication corresponding to the identifier of the second device, and the second indication corresponding to the identifier of the second device is used to indicate that there is a subsequent command to be sent to the second device after the second device is inventoried, the first device determines that there is a subsequent command after the second device is inventoried, in a case that the first information includes the second indication corresponding to the identifier of the second device, and the second indication corresponding to the identifier of the second device is used to indicate that there is no subsequent command to be sent to the second device after the second device is inventoried, the first device determines that there is no subsequent command after the second device is inventoried.

Specifically, the processing of the first device may be as follows. The first device searches whether there is an identifier of the second device from the first information, in a case that the identifier of the second device exists in the first information, the first device searches the second indication corresponding to the identifier of the second device from the first information, and the first device judges whether the second indication corresponding to the identifier of the second device indicates that there is a subsequent command to be sent to the second device after the second device is inventoried. In a case that the second indication corresponding to the identifier of the second device is used to indicate that there is a subsequent command to be sent to the second device after the second device is inventoried, the first device determines that there is a subsequent command after the second device is inventoried. In a case that the second indication corresponding to the identifier of the second device is used to indicate that there is no subsequent command to be sent to the second device after the second device is inventoried, the first device determines that there is no subsequent command after the second device is inventoried.

In this example, since the first information does not include a subsequent command for any one of the devices in the first group, the first device determines that there is a subsequent command after the second device is inventoried, and needs to wait for receiving the command corresponding to the second device. That is, before the first device sends the command corresponding to the second device to the second device, the method further includes the following operation. The first device receives the command corresponding to the second device.

Accordingly, after the core network device sends the identifier of the second device to the application server, the method further includes the following operations. The core network device receives a command corresponding to the second device sent by the application server. The core network device sends a command corresponding to the second device.

The present embodiment is not limited to a manner in which the application server generates a command corresponding to the second device.

Alternatively, in a case that the first device is the second access network device or a terminal, the first device receives a command corresponding to the second device, which may be that the first device receives a command corresponding to the second device sent by the core network device. The core network device sends the command corresponding to the second device, which may be that the core network device sends the command corresponding to the second device to the first device. In a case that the first device is a terminal, the command corresponding to the second device may be carried by a NAS message (for example, a downlink NAS message).

Alternatively, in a case that the first device is a terminal, the first device receives the command corresponding to the second device, which may be that the first device receives the command corresponding to the second device sent by the first access network device. The core network device sends the command corresponding to the second device, which may be that the core network device sends the command corresponding to the second device to the first access network device. Accordingly, the processing of the first access network device may include: the first access network device receives the command corresponding to the second device sent by the core network device, and the first access network device sends the command corresponding to the second device to the terminal. In this example, the command corresponding to the second device sent by the first access network device to the terminal may be carried by an AS message (such AS a downlink AS message).

In another example, the first information includes related identifier(s) of the first group, and further includes at least one of following: the first command, identifier(s) of at least a part of one or more devices in the first group, or one or more second commands. Different second commands of the one or more second commands correspond to identifiers of different devices.

Alternatively, the first information includes the related identifier(s) of the first group and the first command. The first device determines, based on the first information, whether there is a subsequent command after the second device is inventoried, which may be that: the first device determines, based on the first command in the first information, whether there is a subsequent command after the second device is inventoried.

Specifically, the method further includes the following operation. In a case that the first information includes the first command, the first device determines that there is a subsequent command after the second device is inventoried, and takes the first command as the command corresponding to the second device.

In this case, since the first command is directed to all the devices in the first group, the first device may determine whether there is a subsequent command to be sent to the one or more devices in the first group after the one or more devices in the first group are inventoried only if it is determined that the first command is included in the first information.

In addition, in a case that the first information includes only the related identifier(s) of the first group and does not include anything other than the related identifier(s) of the first group, the method may further include the following operation. In a case that the first information includes only the related identifier(s) of the first group, the first device determines that there is no subsequent command after the second device is inventoried.

Alternatively, the first information includes the related identifier(s) of the first group, the identifier(s) of at least a part of the one or more devices in the first group, and one or more second commands. The first device determines, based on the first information, whether there is a subsequent command after the second device is inventoried, which may be that: the first device determines, based on the identifier of the second device, the identifier(s) of at least a part of devices in the first information and one or more second commands, whether there is a subsequent command after the second device is inventoried.

The method further includes one of the following: in a case that the first information includes the second command corresponding to the identifier of the second device, the first device determines that there is a subsequent command after the second device is inventoried, and takes the second command corresponding to the identifier of the second device as a command corresponding to the second device; in a case that the first information does not include the second command corresponding to the identifier of the second device, the first device determines that there is no subsequent command after the second device is inventoried.

Specifically, the processing of the first device may include the following operations. The first device searches whether there is the identifier of the second device from the first information. If the second command corresponding to the identifier of the second device is found from the first information in a case that the identifier of the second device exists in the first information, the first device determines that there is a subsequent command after the second device is inventoried, and takes the second command corresponding to the identifier of the second device as a command corresponding to the second device. In a case that the identifier of the second device does not exist in the first information and/or the second command corresponding to the identifier of the second device is not found from the first information, the first device determines that there is no subsequent command after the second device is inventoried.

In the present example, since the first information includes subsequent command(s) for at least a part of devices in the first group, in a case that the first device determines that there is a subsequent command after the second device is inventoried, the command corresponding to the second device may be directly sent to the second device.

In some examples, the manner in which the first device determines whether the inventory of the devices in the first group is completed may include: the first device determines whether the total number of sent inventory messages reaches a maximum value of the access count, and if it reaches, it is determined that the inventory of the devices in the first group is completed, and otherwise it is determined that the inventory of the devices in the first group is not completed.

The total number of sent inventory messages may be a total number from the beginning of the first inventory message, and the calculation method of the maximum value of the access count is the same as that of the previous embodiment, and the description will not be repeated.

In some examples, the manner in which the first device determines whether the inventory of the devices in the first group is completed may include: the first device counts from zero after last receiving an access message sent by any one of the devices in the first group, adds a current count value by one after sending a new inventory message, and judges whether a new access message sent by the device in the first group is received, and returns the count value to zero if the new access message is received, and if the new access message sent by the device in the first group is not received, whether the current count value reaches the specified number of transmission times is judged, if the current count value reaches the specified number of transmission times, it is determined that the inventory of the devices in the first group is completed, if not, a new inventory message is sent and the count value is added by one, and so on. Here, the specified number of transmission times can be configured according to the actual situation, and it is not limited here.

In some examples, in a case that it is determined based on the first information that there is no subsequent command after the second device is inventoried and the inventory of the devices in the first group is not completed, the one or more inventory messages continued to be sent by the first device are different from the one or more inventory messages sent by the first device before the access message sent by the second device is received in a time domain range, but the contained contents may be the same, and the content that should be carried by each inventory message except the first inventory message is not limited here.

In some examples, after the first device sends the command corresponding to the second device to the second device, the method may further include the following operation. In a case that the first device determines that the second device completes execution of the corresponding command and inventory of the devices in the first group is not completed, the first device continues to send one or more inventory messages.

The first device determines that the second device completes execution of the corresponding command, which may be as follows: the first device turns on the corresponding timer when sending the command corresponding to the second device, and determines that the second device completes execution of the corresponding command when the timing duration of the timer reaches a preset duration; or, in a case that the first device receives the response message from the second device, it is determined that the second device completes execution of the corresponding command. Here, the timing duration may be configured according to the actual situation, and may be, for example, 10 seconds, 5 seconds, or longer or shorter, but is not limited or exhaustive here.

The processing of the second device after receiving the corresponding command may include at least one of the following: in a case that the command corresponding to the second device includes a read command, the second device reads the corresponding content based on the read command, and the second device reports the read content, or in a case that the command corresponding to the second device includes a write command, the second device locally writes the specific content instructed (or instructed to write) by the write command.

Alternatively, the second device reports the read content, which may mean that the second device sends a response message to the first device, and the response message carries the read content by the second device.

The processing after the first device receives the reply message from the second device may further include: the first device extracts the content read by the second device from the reply message sent by the second device, and the first device sends the content read by the second device.

In a case that the first device is the second access network device or a terminal, the first device sends the content read by the second device, which may be that the first device sends the content read by the second device to the core network device. Here, in a case that the first device is a terminal, the content read by the second device may be carried by an uplink NAS message.

Alternatively, in a case that the first device is a terminal, the first device sends the content read by the second device, which may be that the first device sends the content read by the second device to the first access network device. The processing of the first access network device may include: the first access network device receives the content read by the second device sent by the first device, and sends the content read by the second device to the core network device. Here, the content read by the second device sent by the first device may be carried by an uplink AS message.

The processing of the core network device may include: the core network device receives the content read by the second device, and sends the content read by the second device to the AF. The core network device sends the content read by the second device to the AF, which may be that: the core network device directly sends the content read by the second device to the AF; or the core network device sends the content read by the second device to the AF through the NEF.

Alternatively, after the second device locally writes the specific content indicated (or instructed to write) by the write command, the method may further include: the second device sends a response message to the first device, and the response message may be used to indicate that the second device completes the write.

Accordingly, the processing of the first device may further include: the first device receives the response message sent by the second device and sends the response message of the second device.

In a case that the first device is the second access network device or the terminal, the first device sends the response message of the second device, which may be that the first device sends the response message of the second device to the core network device. Here, in a case that the first device is a terminal, the response message of the second device may be carried by an uplink NAS message.

Alternatively, in a case that the first device is a terminal, the first device sends the response message of the second device, which may be that the first device sends the response message of the second device to the first access network device. The processing of the first access network device may include: the first access network device receives the response message of the second device sent by the first device, and sends the response message of the second device to the core network device. Here, the response message of the second device sent by the first device may be carried by an uplink AS message.

The processing of the core network device may include: the core network device receives the response message of the second device and sends the response message of the second device to the AF. The core network device sends the response message of the second device to the AF, which may be that the core network device directly sends the response message of the second device to the AF; or the core network device sends the response message from the second device to the AF through the NEF.

It should be noted that any one of the AIoT devices in the first group performs the same processing as the second device after receiving the inventory message, and thus will not be described in detail.

A processing scenario of the direct connection mode (or direct connection manner) of the above-described embodiment will be described exemplarily with reference to FIG. 8. In the scenario illustrated in FIG. 8, two devices (that is, Device1 and Device2 in FIG. 8) are both AIoT devices, the first group may include Device1 and Device2, the gNB is the first device in the aforementioned embodiment (the first device is specifically the second access network device), and the AMF is the core network device in the aforementioned embodiment, specifically, the method includes the following processing operations.

In operation 801, the AF sends inventory request information to the AMF (or the AF to the AMF through the NEF).

For example, the inventory request message carries the Device ID mask (specifically, it may be the Device ID mask of the first group).

Alternatively, the inventory request message further carries an indication (i.e., the first indication in the foregoing embodiment) indicates whether there is a subsequent command for these devices (i.e., devices in the first group).

Alternatively, the inventory request message further carries a command. Further, the inventory message indicates that the command, i.e., the first command, is for the group of devices (for example, identified by device ID mask), or, a command (i.e., one or more second commands, different second commands corresponding to different device IDs) is individually indicated for each device.

In operation 802, after receiving the inventory request message (that is, the second message in the aforementioned embodiment) from the AF, the AMF forwards the inventory request message to the gNB. In the operation 802, the content carried in the inventory request message is the same as the content carried in the inventory request message in the operation 801.

In operation 803, the gNB sends an inventory message (Query), and broadcasts the Q value, and the Device ID mask. Here, the gNB sends the inventory message, which may be that: the gNB sends the inventory message once or multiple times. The inventory message sent for the first time is the first inventory message, and the first inventory message may carry a Q value and a Device ID mask. In addition to the first inventory message, other inventory messages are referred to as Query Repeat messages, and these Query Repeat messages may carry the Q value and/or the Device ID mask, and/or the Query Repeat message may also carry other contents, which is not limited in this example.

In operation 804, after receiving the Q value, Device1 and Device2 select a random number between 0 and 2^Q.

As illustrated in FIG. 8, taking Device1 as an example, after Device1 selects a random number, the random number decreases by 1 every time the Query Repeat message is received, until the value drops to 0. Device1 initiates an access process and carries Device ID information (i.e., sends an access message to the gNB, and the access message carries the ID of the AIoT Device).

On the gNB side, after the Device 1 initiates the access process, if it is determined that the Device 1 has a subsequent command based on the indication in the inventory request message in the operation 802, the subsequent operations 805 to 810 are performed.

In operation 805, the gNB reports the Device1 ID to the AMF.

In the operation 806, the AMF reports the Device1 ID to the AF or reports it to the AF through the NEF.

In operation 807, after the AF receives the related Device1 ID, the AF triggers command again (including writing data to Device1 and/or reading data). The AF sends a command message directly to the AMF or through the NEF to the AMF, and the command carries the Device1 ID and specific command data.

In operation 808, after the AMF receives the command, the AMF sends a command message to the gNB.

In operation 809, the gNB sends the command for the current Device1. Here, the command may include only the specific command data, or may include the same content as the Command message.

In operation 810, the gNB continues to inventory other devices (other devices in the first group).

Specifically, the operation 810 includes: after the command of the current Device1 is completed, the gNB may continue to send a Query Repeat message for inventorying other devices.

Alternatively, in the operation 804, after Device1 initiates the access process, if the gNB determines, based on the indication in the inventory request message in the operation 802, that there is no subsequent command for Device1, or that the command is not received in the inventory request message in the operation 802, the subsequently, the operation 805 is performed by the gNB to report the Device1 ID to the AMF. In the operation 806, the AMF reports the Device1 ID to the AF, or reports it to the AF through the NEF, and, before or after or simultaneously with the execution of the operation 805, the gNB may continue to send a Query Repeat message for inventory other devices.

Alternatively, if there is no indication in the inventory request message in the operation 802 for determining whether there is a subsequent command for the Device, and there is no command in the inventory request message in the operation 802, accordingly, in the operation 804, after Device1 initiates the access process, the gNB needs to directly wait for a certain period of time before performing Query Repeat. Here, the gNB waiting for a certain period of time may mean that after performing the operations 805 and 806, the AF determines whether there is a command to be sent to the Device1. If the AF determines that there is no command to be sent to the Device1, the operations 807-809 will not be performed. In a case that the gNB determines that the command corresponding to the Device1 has not been received after waiting for a certain period of time, the gNB may continue to send a Query Repeat message for inventory other devices. Alternatively, the gNB waiting for a certain period of time may mean that after performing the operations 805 and 806, if the AF determines that there is a command sent to the Device 1, the operations 807 to 809 are still performed, and then the gNB performs the operation 810 to continue sending a Query Repeat message for inventory other devices.

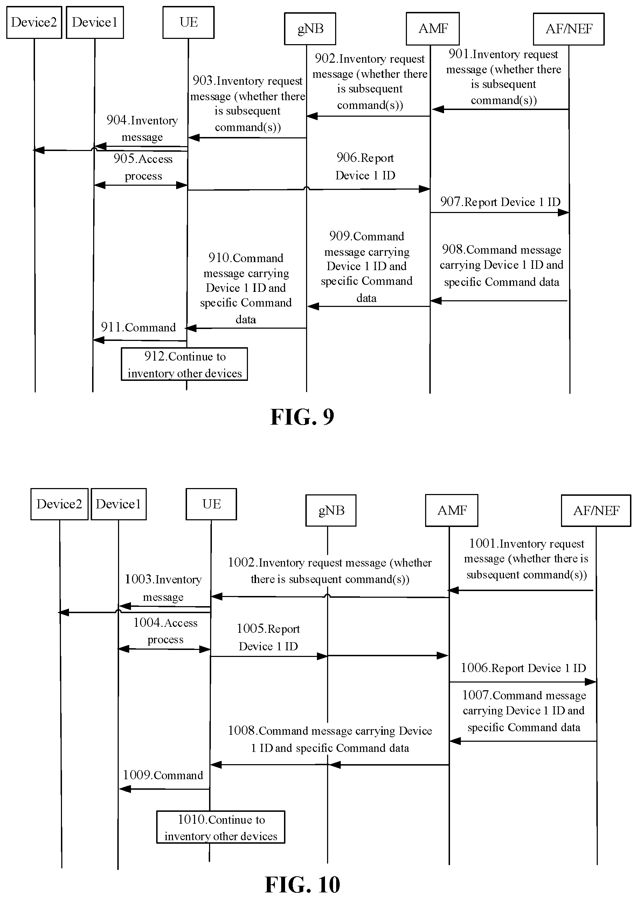

A processing scenario of the indirect connection mode (or indirect connection manner) of the above-described embodiment will be described exemplarily with reference to FIG. 9. In the scenario illustrated in FIG. 9, two devices (that is, Device1 and Device2 in FIG. 9) are both AIoT devices, the first group may include Device1 and Device2, the UE is the first device in the aforementioned embodiment (the first device is specifically a terminal), the gNB is the first access network device in the aforementioned embodiment, and the AMF is the core network device in the aforementioned embodiment, specifically, the method includes the following processing operations.

The operation 901 is the same as the operation 801, which will not be described in detail.

In operation 902, after the AMF receives the inventory request message from the AF, the gNB forwards the inventory request message. In the operation 902, the content carried in inventory request message is the same as the content carried in the inventory request message in the operation 901.

In the operation 903, the gNB sends an inventory request message (Query) to the UE, the message is the fourth message in the previous embodiment, and the content carried in the message is the same as that in the operation 902.

In operation 904, the UE sends an inventory message (Query), and broadcasts the Q value and the Device ID mask. Here, the UE sends the inventory message, which may be that the UE sends the inventory message once or multiple times. The inventory message sent for the first time is the first inventory message, and the first inventory message may carry a Q value and a Device ID mask. In addition to the first inventory message, other inventory messages are referred to as Query Repeat messages, and these Query Repeat messages may carry the Q value and/or the Device ID mask, and/or the Query Repeat message may also carry other contents, which is not limited in this example.

In operation 905, after receiving the Q value, Device1 and Device2 select a random number between 0 and 2^Q.

As illustrated in FIG. 9, taking Device1 as an example, after Device1 selects a random number, the random number decreases by 1 every time the Query Repeat message is received, until the value drops to 0. Device1 initiates an access process and carries Device1 ID information (i.e., sends an access message to the UE, and the access message carries the ID of the AIoT device).

On the UE side, after the Device 1 initiates the access process, if it is determined based on the indication in the inventory request message in the operation 903 that there is a subsequent command for Device 1, the subsequent operations 906 to 912 are performed.

In operation 906, the UE reports the Device1 ID to the AMF through the gNB.

The operations 907 to 909 are the same as the operations 806 to 808 in the above-described example, which will not be described in detail.

In operation 910, the gNB forwards a command message to the UE.

In operation 911, the UE sends a command for the current Device1.

In operation 912, the UE continues to inventory other devices. Specifically, the operation 912 includes: after the command of the current Device1 is completed, the UE can continue to send a Query Repeat message for inventory other devices.

Alternatively, in the operation 905, the Device 1 initiates the access process, if the UE determines, based on the indication in the inventory request message, that there is no a subsequent command for the Device 1 or that the command is not received in the inventory request message, subsequently, the operations 906 to 907 are performed; and, before or after or simultaneously with execution of the operation 906, the UE may continue to send a Query Repeat message for inventorying other devices.

Alternatively, if there is no indication in the inventory request message in the operation 903 for determining whether there is a subsequent command for the device, and there is no command in the inventory request message in the operation 903, accordingly, in the operation 905, after Device1 initiates the access process, the UE needs to directly wait for a certain period of time before performing Query Repeat. Here, the UE waiting for a certain period of time may mean that after performing the operations 906 and 907, the AF determines whether there is a command to be sent to the Device1. If the AF determines that there is no command to be sent to the Device1, it will not perform the operations 908-910. In a case that the UE determines that the command corresponding to the Device1 has not been received after waiting for a certain period of time, the UE may continue to send a Query Repeat message for inventorying other devices. Alternatively, the UE waiting for a certain period of time may mean that after performing the operations 906 and 907, if the AF determines that there is a command to be sent to the Device 1, the UE still performs the operations 908 to 911, and then the UE performs the operation 912.

A processing scenario of the indirect connection mode (or indirect connection manner) of the above-described embodiment will be described exemplarily with reference to FIG. 10. In the scenario illustrated in FIG. 10, two devices (that is, Device1 and Device2 in FIG. 10) are AIoT devices, the first group may include Device1 and Device2, the UE is the first device in the aforementioned embodiment (the first device is specifically a terminal), the gNB is the third access network device in the aforementioned embodiment, and the AMF is the core network Device in the aforementioned embodiment, specifically, the method includes the following processing operations.

The operation 1001 is the same as the operation 801, which will not be described in detail.

In operation 1002, after receiving the inventory request message from the AF, the AMF forwards an inventory request message (NAS message) to the UE through the gNB, the message is the third message in the aforementioned embodiment, and the content carried by the message is the same as that in the operation 1001, which will not be described in detail.

In operation 1003, the UE sends an inventory message (Query), and broadcasts the Q value and the Device ID mask. The related description of the operation 1003 is the same as that of the operation 904, which will not be described in detail.

The operations 1004 to 1007 are the same as the operations 905 to 908 in the foregoing example, and will not be described in detail.

In operation 1008, the AMF sends a command message to the UE, and the command carries Device1 ID and specific command data. The command message may be forwarded to the UE through the gNB, or may be transmitted through the NAS message (for example, transparently transmitted through the gNB to the UE).

In operation1009, the UE sends a command for the current Device1. Here, the Command may include only the specific command data, or may include the same content as the Command message.

In operation 1010, the UE continues to inventory other devices. Specifically, the operation 1010 includes: after the command of the current Device1 is completed, the UE can continue to send a Query Repeat message for inventorying other Devices.

Alternatively, in the operation 1004, after the Device 1 initiates the access process, if the UE determines based on the indication in the inventory request message that there is no a subsequent command for the Device 1 or that the command is not received in the inventory request message, the UE subsequently performs the operations 1005 to 1006, and, before or after or at the same time as performing the operation 1005, the UE may continue to send a Query Repeat message for inventorying other devices.

Alternatively, if there is no indication in the inventory request message for determining whether there is a subsequent command for the Device, and there is no command in the inventory request message, accordingly, in the operation 1004, after Device1 initiates the access process, the UE needs to directly wait for a certain period of time before performing Query Repeat. Here, the UE waiting for a certain period of time may mean that after performing operations 1005 and 1006, the AF determines whether there is a command sent to the Device1, if the AF determines that there is no command sent to the Device1, the operations 1007-1009 will not performed. The UE may continue to send a Query Repeat message for inventory other devices when it determines that the command corresponding to the Device1 has not been received after waiting for a certain period of time. Alternatively, the UE waiting for a certain period of time may mean that after performing the operations 1005 and 1006, if the AF determines that there is a command sent to the Device 1, the operations 1007-1010 are still performed.

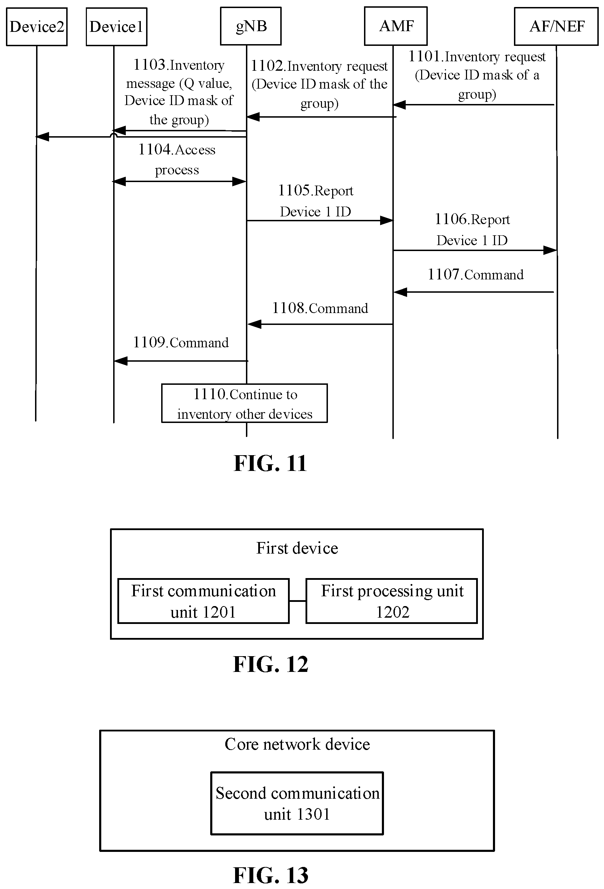

A processing method of inventorying and issuing command to AIoT devices in a group (for example, including Device 1 and Device2 in FIG. 11) in a 3GPP network (via an access network device that is gNB) in the related art will be described with reference to FIG. 11.

In operation 1101, the AF sends an inventory request to the AMF or through the NEF to the AMF, and the request message carries the Device ID mask of the group.

In operation 1102, after the AMF receives the inventory request message from the AF, the gNB forwards the inventory request, and the message carries the Device ID mask of the group.

In operation 1103, the gNB sends an inventory message (Query) and broadcasts the Q value and the Device ID mask of the group.

In operation 1104: after receiving the Q value, Device1 and Device2 select a random number between 0 and 2^Q. As illustrated in FIG. 11, taking Device1 as an example, after Device1 selects a random number, every time the QueryRepeat message is received, the random number decreases by 1 until the value drops to 0, and Device1 initiates the access process and carries the Device1 ID information.

In operation 1105, the gNB reports the Device1 ID to the AMF.

In operation 1106, the AMF reports the Device1 ID to the AF, or reports the Device1 ID to the AF through the NEF.

In operation 1107, after the AF receives the related Device1 ID, the AF triggers command (including writing data to the Device and/or reading data) again, and the AF sends a Command message directly to the AMF or through the NEF to the AMF, and the Command message carries the Device1 ID and specific command data.

In operation 1108, the AMF receives the Command message and sends the Command to the gNB.

In operation 1109, the gNB sends a Command for the current Device1.

In operation 1110, after the command of Device1 is completed, the gNB can continue to send a Query Repeat message for continuing to inventory other devices (i.e., continuing to inventory other devices in the group).

As can be seen from the flow provided in FIG. 11, in the prior art, after the AF sends an inventory message to the gNB through the AMF, the gNB will respectively receive the Device ID reported by a single AIoT Device in a group, and the Device ID will be reported to the AF through the AMF to complete the inventory, and then the AF will issue a command corresponding to the AIoT Device to the gNB through the AMF, and the gNB will continue to inventory the next AIoT Device until the AIoT Device completes the processing of the command. In this process, regardless of whether there is a subsequent command for each currently inventoried AIoT device, the gNB needs to wait for a period of time before it can inventory the next AIoT device in the group, which leads to inefficient inventory of multiple AIoT devices in a group.

By adopting the solutions provided by the present disclosure, the first device may receive the first information used for determining whether there is subsequent command(s) to be sent to the one or more devices in the first group after the one or more devices in the first group are inventoried. In this way, the first device can determine, through the first information, whether a subsequent command needs to be sent to any one of the devices in the first group after the device is inventoried, so that once it is determined that there is no subsequent command that needs to be sent to a certain device after the device is inventoried, the other devices in the first group can be directly inventoried, thereby improving the inventory efficiency of the devices in the first group. In other words, by adopting the above solutions, it is possible to avoid the problem of low inventory efficiency caused by the fact that the first device needs to wait for a period of time to determine that the subsequent command corresponding to the device has not been sent after the first device inventories one device in the group, so as to determine that there is no subsequent command for the device, and then other devices in the group are inventoried.

FIG. 12 is a schematic diagram of a composition structure of the first device according to an embodiment of the present disclosure. The first device includes the first communication unit 1201.

The first communication unit 1201 is configured to receive first information. The first information is used to determine whether there is subsequent command(s) to be sent to one or more devices in a first group after the one or more devices in the first group are inventoried.

The first information includes related identifier(s) of the first group.

The first information further includes at least one of the first indication, identifier(s) of at least a part of the one or more devices in the first group, one or more second indications, the first command, or one or more second commands. The first indication is used to indicate whether there are the subsequent command(s) to be sent to the one or more devices in the first group after the one or more devices in the first group are inventoried. Different second indications of the one or more second indications correspond to identifiers of different devices in the first group, and each of the one or more second indications is used to indicate whether there is a subsequent command to be sent to a corresponding device in the first group after the corresponding device in the first group is inventoried. The first command is a subsequent command to be sent to the one or more devices in the first group after the one or more devices in the first group is inventoried. Different second commands of the one or more second commands correspond to the identifiers of different devices in the first group, and each of the one or more second commands is a subsequent command to be sent to a corresponding device in the first group after the corresponding device in the first group is inventoried.

The first communication unit is configured to send one or more inventory messages. The one or more inventory messages are configured to inventory the one or more devices in the first group.

The first inventory message of the one or more inventory messages carries related identifier(s) of the first group and/or a count-related value, and the count-related value is used to determine access opportunity (opportunities) for the one or more devices in the first group.

The related identifier(s) of the first group includes at least one of: a Device ID mask of the first group, a group identifier of the first group, a group session identifier of the first group, a group service identifier of the first group, a slice identifier corresponding to the first group, or a Data Network Name (DNN) corresponding to the first group.

The first communication unit is configured to receive an access message sent by the second device, and send the identifier of the second device. The access message carries an identifier of the second device, and the second device is one of the one or more devices in the first group.

The first communication unit is configured to perform one of: in a case of determining, based on the first information, that there is on a subsequent command after the second device is inventoried, and in a case that inventory for the device(s) in the first group is not completed, continuing to send the one or more inventory messages; or in a case of determining, based on the first information, that there is a subsequent command after the second device is inventoried, sending a command corresponding to the second device to the second device.

As illustrated in FIG. 12, the first device further includes the first processing unit 1202. The first processing unit is configured to perform one of: in a case that the first indication in the first information is used to indicate that there is the subsequent command(s) to be sent to the one or more devices in the first group after the one or more devices in the first group are inventoried, determining that there is a subsequent command after the second device is inventoried; or in a case that the first indication in the first information is used to indicate that there is no the subsequent command(s) to be sent to one or more devices in the first group after the one or more devices in the first group are inventoried, determining that there is no a subsequent command after the second device is inventoried.

The first processing unit is configured to perform one of: in a case that the first information includes the second indication corresponding to the identifier of the second device, and the second indication corresponding to the identifier of the second device is used to indicate that there is a subsequent command to be sent to the second device after the second device is inventoried, determining that there is the subsequent command after the second device is inventoried; or in a case that the first information comprises the second indication corresponding to the identifier of the second device, and the second indication corresponding to the identifier of the second device is used to indicate that there is no the subsequent command to be sent to the second device is after the second device is inventoried, determining that there is no the subsequent command after the second device is inventoried.

The first communication unit is configured to receive the command corresponding to the second device.

The first processing unit is configured to, in a case that the first information includes the first command, determine that there is the subsequent command after the second device is inventoried, and take the first command as the command corresponding to the second device.

The first processing unit is configured to perform one of: in a case that the first information includes the second command corresponding to the identifier of the second device, determining that there is the subsequent command after the second device is inventoried, and taking the second command corresponding to the identifier of the second device as the command corresponding to the second device; or in a case that the first information does not include the second command corresponding to the identifier of the second device, determining that there is no the subsequent command after the second device.

The first communication unit is configured to perform one of: receiving the first information sent by a core network device; or receiving first information sent by the first access network device.

The first device is the second access network device or a terminal.

Each of the one or more devices in the first group is an AIoT device.

FIG. 13 is a schematic diagram of a composition and structure of a core network device according to an embodiment of the present disclosure. The core network device includes the second communication unit.

The second communication unit 1301 is configured to send the first information. The first information is used to determine whether there is subsequent command(s) to be sent to one or more devices in a first group after the one or more devices in the first group are inventoried.

The first information includes related identifier(s) of the first group.

The first information further includes at least one of: the first indication, identifier(s) of at least a part of the one or more devices in the first group, one or more second indications, a first command, or one or more second commands. The first indication is used to indicate whether there is the subsequent command(s) to be sent to the one or more devices in the first group after the one or more devices in the first group are inventoried. Different second indications of the one or more second indications correspond to identifiers of different devices in the first group, and each of the one or more second indications is used to indicate whether there is a subsequent command to be sent to a corresponding device in the first group after the corresponding device in the first group is inventoried. The first command is a subsequent command to be sent to the one or more devices in the first group after the one or more devices in the first group are inventoried. Different second commands of the one or more second commands correspond to the identifiers of different devices in the first group, and each of the one or more second commands is a subsequent command to be sent to a corresponding device in the first group after the corresponding device in the first group is inventoried.

The second communication unit is configured to receive the first information sent by an application server.

The second communication unit is configured to perform one of: sending the first information to the first access network device; or sending the first information to the first device.

The second communication unit is configured to receive an identifier of the second device and send the identifier of the second device to an application server. The second device is one of the one or more devices in the first group.

The second communication unit is configured to receive a command corresponding to the second device sent by the application server; and send the command corresponding to the second device.

The first device is a second access network device or a terminal.

Each of the one or more devices in the first group is an AIoT device.

The devices according to the embodiments of the present disclosure can realize the corresponding functions of each device in the aforementioned authentication method embodiments. The corresponding flow, function, implementation manner and beneficial effect of each module (sub-module, unit or component, etc.) in the first device or the core network device may be referred to the corresponding description in the above method embodiments, and will not be described again here. It should be noted that the functions described for each module (sub-module, unit, component, or the like) in the first device or the core network device of the embodiments of the present disclosure may be realized by different modules (sub-module, unit, component, or the like), or may be realized by the same module (sub-module, unit, component, or the like).

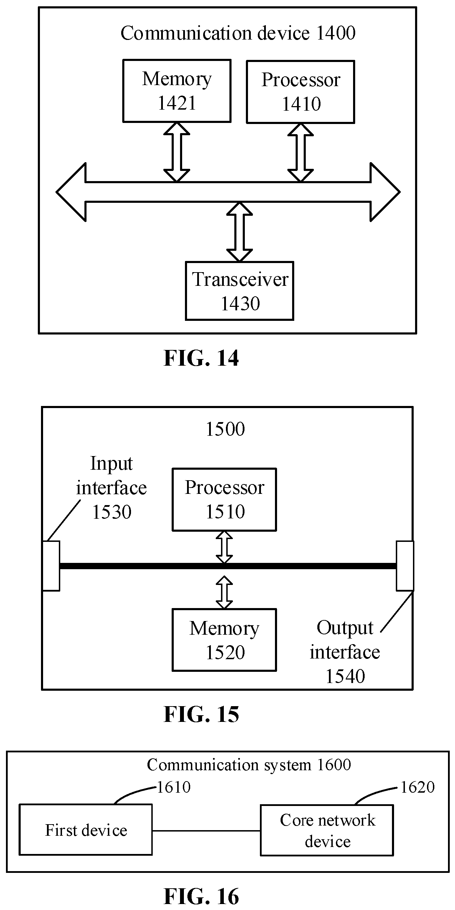

FIG. 14 is a schematic structural diagram of a communication device 1400 according to an embodiment of the present disclosure. The communication device 1400 includes a processor 1410 is configured to invoke and execute a computer program from a memory to cause the communication device 1400 to implement the methods in the embodiment of the present disclosure. In one possible implementation, the communication device 1400 may further include a memory 1420. Here, the processor 1410 may invoke and execute a computer program from the memory 1420 to cause the communication device 1400 to implement the method in the embodiment of the present disclosure. The memory 1420 may be a separate device independent of the processor 1410, or may be integrated in the processor 1410. In one possible implementation, the communication device 1400 may further include a transceiver 1430, and the processor 1410 may control the transceiver 1430 to communicate with other devices, specifically, may send information or data to or receive information or data sent by other devices. Here, the transceiver 1430 may include a transmitter and a receiver. The transceiver 1430 may further include one or more antennas.

In a possible implementation, the communication device 1400 may be the first device or a core network device according to the embodiments of the present disclosure, and the communication device 1400 may implement corresponding processes implemented by the first device or the core network device in various methods of the embodiments of the present disclosure, which will not be described again here for simplicity.

FIG. 15 is a schematic configuration diagram of a chip 1500 according to an embodiment of the present disclosure. The chip 1500 includes a processor 1510. The processor is configured to invoke and execute a computer program from a memory to implement the methods in the embodiments of the present disclosure. In one possible implementation, the chip 1500 may further include a memory 1520. Here, the processor 1510 may invoke and execute a computer program from the memory 1520 to implement the method executed by the first device or the core network device in the embodiments of the present disclosure. The memory 1520 may be a separate device independent of the processor 1510, or may be integrated in the processor 1510. In one possible implementation, the chip 1500 may further include an input interface 1530. Here, the processor 1510 may control the input interface 1530 to communicate with other devices or chips, and specifically, may acquire information or data sent by other devices or chips. In one possible implementation, the chip 1500 may further include an output interface 1540. Here, the processor 1510 may control the output interface 1540 to communicate with other devices or chips, and specifically, may output information or data to other devices or chips.

In a possible implementation, the chip may be applied to the first device or the core network device in the embodiments of the present disclosure, and the chip may realize the corresponding flow implemented by the first device or the core network device in various methods of the embodiments of the present disclosure, which will not be described again here for simplicity. It should be understood that the chip mentioned in the embodiments of the present disclosure may also be referred to as a system-level chip, a system chip, a chip system, a system-on-chip chip, or the like. The processors mentioned above may be general purpose processors, digital signal processors (DSP), field programmable gate arrays (FPGAs), application specific integrated circuits (ASICs) or other programmable logic devices, transistor logic devices, discrete hardware components, and the like. Here, the general-purpose processor mentioned above may be a microprocessor, any conventional processor, or the like. The memory mentioned above may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EPROM), or a flash memory. The volatile memory may be a random access memory (RAM). It should be understood that the above-described memory is exemplary but not limiting, and for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), and the like. That is, the memory in embodiments of the present disclosure is intended to include, but is not limited to, these and any other suitable types of memory.

FIG. 16 is a schematic block diagram of a communication system 1600 according to an embodiment of the present disclosure. The communication system 1600 includes the first device 1610 and a core network device 1620. Here, the first device 1610 may be used to implement the corresponding functions implemented by the first device in the above-described method. The core network device 1620 may be used to implement the corresponding functions implemented by the core network device in the above-described method. For the sake of brevity, details will not be described here.

In the above-described embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, a flow or function according to an embodiment of the present disclosure is generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center to another website site, computer, server, or data center via wired (e.g., coaxial cable, fiber optic, Digital Subscriber Line (DSL)) or wireless (e.g., infrared, wireless, microwave, etc.). The computer-readable storage medium may be any available medium accessible by a computer or a data storage device such as a server, data center, or the like incorporating one or more of the available media integrations. The available medium may be a magnetic medium (e.g., a floppy Disk, a hard Disk, a magnetic tape), an optical medium (e.g., a DVD), or a semiconductor medium (e.g., a Solid State Disk (SSD)), or the like.

It should be understood that in various embodiments of the present disclosure, the size of the sequence numbers of the above-described processes does not mean the order of execution order, and the execution order of each process should be determined by its function and inherent logic, and should not constitute any limitation on the implementation process of the embodiments of the present disclosure. Those skilled in the art can clearly understand that for convenience and simplicity of the description, the specific working processes of the above-described systems, devices, and units can be referred to the corresponding processes in the above-described method embodiments, and will not be described again here. The above are only specific embodiments of the present disclosure, but the protection scope of the present disclosure is not limited thereto, and any person familiar with the technical field can easily think of changes or substitutions within the technical scope disclosed in the present disclosure, and all of them should be covered within the protection scope of the present disclosure. Therefore, the scope of protection of the present disclosure should be determined by the scope of protection of the claim.

## Claims

1. A communication method, comprising:
receiving, by a first device, first information, wherein the first information is used to determine whether there is subsequent command(s) to be sent to one or more devices in a first group after the one or more devices in the first group are inventoried.

2. The method of claim 1, wherein the first information comprises related identifier(s) of the first group.

3. The method of claim 1 or 2, wherein the first information further comprises at least one of:
a first indication, wherein the first indication is used to indicate whether there is the subsequent command(s) to be sent to the one or more devices in the first group after the one or more devices in the first group are inventoried;
identifier(s) of at least a part of the one or more devices in the first group;
one or more second indications, wherein different second indications of the one or more second indications correspond to identifiers of different devices in the first group, and each of the one or more second indications is used to indicate whether there is a subsequent command to be sent to a corresponding device in the first group after the corresponding device in the first group is inventoried;
a first command, wherein the first command is a subsequent command to be sent to the one or more devices in the first group after the one or more devices in the first group are inventoried; or
one or more second commands, wherein different second commands of the one or more second commands correspond to the identifiers of different devices in the first group, and each of the one or more second commands is a subsequent command to be sent to a corresponding device in the first group after the corresponding device in the first group is inventoried.

4. The method of claim 3, wherein after the first device receives the first information, the method further comprises:
sending, by the first device, one or more inventory messages, wherein the one or more inventory messages are used to inventory the one or more devices in the first group.

5. The method of claim 4, wherein a first inventory message of the one or more inventory messages carries related identifier(s) of the first group and/or a count-related value, and the count-related value is used to determine access opportunity (opportunities) for the one or more devices in the first group.

6. The method of any one of claims 2 to 5, wherein the related identifier(s) of the first group comprises at least one of: a Device ID mask of the first group, a group identifier of the first group, a group session identifier of the first group, a group service identifier of the first group, a slice identifier corresponding to the first group, or a Data Network Name (DNN) corresponding to the first group.

7. The method of claim 4 or 5, wherein after the first device sends the one or more inventory messages, the method further comprises:
receiving, by the first device, an access message sent by a second device, wherein the access message carries an identifier of the second device, and the second device is one of the one or more devices in the first group; and
sending, by the first device, the identifier of the second device.

8. The method of claim 7, wherein after the first device receives the access message sent by the second device, the method further comprises one of:
in a case of determining, based on the first information, that there is no a subsequent command after the second device is inventoried, and in a case that inventory for the device(s) in the first group is not completed, continuing to send, by the first device, the one or more inventory messages; or
in a case of determining, based on the first information, that there is a subsequent command after the second device is inventoried, sending, by the first device, a command corresponding to the second device to the second device.

9. The method of claim 8, wherein the method further comprises one of:
in a case that the first indication in the first information is used to indicate that there is the subsequent command(s) to be sent to the one or more devices in the first group after the one or more devices in the first group are inventoried, determining, by the first device, that there is a subsequent command after the second device is inventoried; or
in a case that the first indication in the first information is used to indicate that there is no the subsequent command(s) to be sent to one or more devices in the first group after the one or more devices in the first group are not inventoried, determining, by the first device, that there is no a subsequent command after the second device is inventoried.

10. The method of claim 8, wherein the method further comprises one of:
in a case that the first information comprises a second indication corresponding to the identifier of the second device, and the second indication corresponding to the identifier of the second device is used to indicate that there is a subsequent command to be sent to the second device after the second device is inventoried, determining, by the first device, that there is the subsequent command after the second device is inventoried; or
in a case that the first information comprises the second indication corresponding to the identifier of the second device, and the second indication corresponding to the identifier of the second device is used to indicate that there is no the subsequent command to be sent to the second device after the second device is inventoried, determining, by the first device, that there is no the subsequent command after the second device is inventoried.

11. The method of any one of claims 7 to 10, wherein before the first device sends a command corresponding to the second device to the second device, the method further comprises:
receiving, by the first device, the command corresponding to the second device.

12. The method of claim 8, further comprising:
in a case that the first information comprises the first command, determining, by the first device, that there is the subsequent command after the second device is inventoried, and taking the first command as the command corresponding to the second device.

13. The method of claim 8, wherein the method further comprises one of:
in a case that the first information comprises a second command corresponding to the identifier of the second device, determining, by the first device, that there is the subsequent command after the second device is inventoried, and taking the second command corresponding to the identifier of the second device as the command corresponding to the second device; or
in a case that the first information does not comprise the second command corresponding to the identifier of the second device, determining, by the first device, that there is no the subsequent command after the second device is inventoried.

14. The method of any one of claims 1 to 13, wherein receiving, by the first device, the first information comprises one of:
receiving, by the first device, the first information sent by a core network device; or
receiving, by the first device, the first information sent by a first access network device.

15. The method of any one of claims 1 to 14, wherein the first device is a second access network device or a terminal.

16. The method of any one of claims 1 to 15, wherein each of the one or more devices in the first group is an Ambient power-enabled IoT (AIoT) device.

17. A communication method, comprising:
sending, by a core network device, first information, wherein the first information is used to determine whether there is subsequent command(s) to be sent to one or more devices in a first group after the one or more devices in the first group are inventoried.

18. The method of claim 17, wherein the first information comprises related identifier(s) of the first group.

19. The method of claim 17 or 18, wherein the first information further comprises at least one of:
a first indication, wherein the first indication is used to indicate whether there is the subsequent command(s) to be sent to the one or more devices in the first group after the one or more devices in the first group are inventoried;
identifier(s) of at least a part of the one or more devices in the first group;
one or more second indications, wherein different second indications of the one or more second indications correspond to identifiers of different devices in the first group, and each of the one or more second indications is used to indicate whether there is a subsequent command to be sent to a corresponding device in the first group after the corresponding device in the first group is inventoried;
a first command, wherein the first command is a subsequent command to be sent to the one or more devices in the first group after the one or more devices in the first group are inventoried; or
one or more second commands, wherein different second commands of the one or more second commands correspond to the identifiers of different devices in the first group, and each of the one or more second commands is a subsequent command to be sent to a corresponding device in the first group after the corresponding device in the first group is inventoried.

20. The method of any one of claims 17 to 19, wherein before the core network device sends the first information, the method further comprises:
receiving, by the core network device, the first information sent by an application server.

21. The method of any one of claims 17 to 20, wherein sending, by the core network device, the first information comprises one of:
sending, by the core network device, the first information to a first access network device; or
sending, by the core network device, the first information to a first device.

22. The method of any one of claims 17 to 21, wherein after the core network device sends the first information, the method further comprises:
receiving, by the core network device, an identifier of a second device, wherein the second device is one of the one or more devices in the first group; and
sending, by the core network device, the identifier of the second device to an application server.

23. The method of claim 22, wherein after the core network device sends the identifier of the second device to the application server, the method further comprises:
receiving, by the core network device, a command corresponding to the second device sent by the application server; and
sending, by the core network device, the command corresponding to the second device.

24. The method of claim 21, wherein the first device is a second access network device or a terminal.

25. The method of any one of claims 17 to 24, wherein each of the one or more devices in the first group is an Ambient power-enabled IoT (AIoT) device.

26. A first device comprising:
a first communication unit, configured to receive first information, wherein the first information is used to determine whether there is subsequent command(s) to be sent to one or more devices in a first group after the one or more devices in the first group are inventoried.

27. The first device of claim 26, wherein the first information comprises related identifier(s) of the first group.

28. The first device of claim 26 or 27, wherein the first information further comprises at least one of:
a first indication, wherein the first indication is used to indicate whether there are the subsequent command(s) to be sent to the one or more devices in the first group after the one or more devices in the first group are inventoried;
identifier(s) of at least a part of the one or more devices in the first group;
one or more second indications, wherein different second indications of the one or more second indications correspond to identifiers of different devices in the first group, and each of the one or more second indications is used to indicate whether there is a subsequent command to be sent to a corresponding device in the first group after the corresponding device in the first group is inventoried;
a first command, wherein the first command is a subsequent command to be sent to the one or more devices in the first group after the one or more devices in the first group is inventoried; or
one or more second commands, wherein different second commands of the one or more second commands correspond to the identifiers of different devices in the first group, and each of the one or more second commands is a subsequent command to be sent to a corresponding device in the first group after the corresponding device in the first group is inventoried.

29. The first device of claim 28, wherein the first communication unit is configured to send one or more inventory messages, wherein the one or more inventory messages are configured to inventory the one or more devices in the first group.

30. The first device of claim 29, wherein a first inventory message of the one or more inventory messages carries related identifier(s) of the first group and/or a count-related value, and the count-related value is used to determine access opportunity (opportunities) for the one or more devices in the first group.

31. The first device of any one of claims 27 to 30, wherein the related identifier(s) of the first group comprises at least one of: a Device ID mask of the first group, a group identifier of the first group, a group session identifier of the first group, a group service identifier of the first group, a slice identifier corresponding to the first group, or a Data Network Name (DNN) corresponding to the first group.

32. The first device of claim 29 or 30, wherein the first communication unit is configured to: receive an access message sent by a second device, wherein the access message carries an identifier of the second device, and the second device is one of the one or more devices in the first group; and send the identifier of the second device.

33. The first device of claim 32, wherein the first communication unit is configured to perform one of:
in a case of determining, based on the first information, that there is on a subsequent command after the second device is inventoried, and in a case that inventory for the device(s) in the first group is not completed, continuing to send the one or more inventory messages; or
in a case of determining, based on the first information, that there is a subsequent command after the second device is inventoried, sending a command corresponding to the second device to the second device.

34. The first device of claim 33, wherein the first device further comprises a first processing unit, and the first processing unit is configured to perform one of:
in a case that the first indication in the first information is used to indicate that there is the subsequent command(s) to be sent to the one or more devices in the first group after the one or more devices in the first group are inventoried, determining that there is a subsequent command after the second device is inventoried; or
in a case that the first indication in the first information is used to indicate that there is no the subsequent command(s) to be sent to one or more devices in the first group after the one or more devices in the first group are inventoried, determining that there is no a subsequent command after the second device is inventoried.

35. The first device of claim 33, wherein the first processing unit is configured to perform one of:
in a case that the first information comprises a second indication corresponding to the identifier of the second device, and the second indication corresponding to the identifier of the second device is used to indicate that there is a subsequent command to be sent to the second device after the second device is inventoried, determining that there is the subsequent command after the second device is inventoried; or
in a case that the first information comprises the second indication corresponding to the identifier of the second device, and the second indication corresponding to the identifier of the second device is used to indicate that there is no the subsequent command to be sent to the second device is after the second device is inventoried, determining that there is no the subsequent command after the second device is inventoried.

36. The first device of any one of claims 32 to 35, wherein the first communication unit is configured to receive the command corresponding to the second device.

37. The first device of claim 33, wherein the first processing unit is configured to: in a case that the first information comprises the first command, determine that there is the subsequent command after the second device is inventoried, and take the first command as the command corresponding to the second device.

38. The first device of claim 33, wherein the first processing unit is configured to perform one of:
in a case that the first information comprises a second command corresponding to the identifier of the second device, determining that there is the subsequent command after the second device is inventoried, and taking the second command corresponding to the identifier of the second device as the command corresponding to the second device; or
in a case that the first information does not comprise the second command corresponding to the identifier of the second device, determining that there is no the subsequent command after the second device.

39. The first device of any one of claims 26 to 38, wherein the first communication unit is configured to perform one of:
receiving the first information sent by a core network device; or
receiving the first information sent by a first access network device.

40. The first device of any one of claims 26 to 39, wherein the first device is a second access network device or a terminal.

41. The first device of any one of claims 26 to 40, wherein each of the one or more devices in the first group is an Ambient power-enabled IoT (AIoT) device.

42. A core network device, comprising:
a second communication unit, configured to send first information, wherein the first information is used to determine whether there is subsequent command(s) to be sent to one or more devices in a first group after the one or more devices in the first group are inventoried.

43. The core network device of claim 42, wherein the first information comprises related identifier(s) of the first group.

44. The core network device of claim 42 or 43, wherein the first information further comprises at least one of:
a first indication, wherein the first indication is used to indicate whether there is the subsequent command(s) to be sent to the one or more devices in the first group after the one or more devices in the first group are inventoried;
identifier(s) of at least a part of the one or more devices in the first group;
one or more second indications, wherein different second indications of the one or more second indications correspond to identifiers of different devices in the first group, and each of the one or more second indications is used to indicate whether there is a subsequent command to be sent to a corresponding device in the first group after the corresponding device in the first group is inventoried;
a first command, wherein the first command is a subsequent command to be sent to the one or more devices in the first group after the one or more devices in the first group are inventoried; or
one or more second commands, wherein different second commands of the one or more second commands correspond to the identifiers of different devices in the first group, and each of the one or more second commands is a subsequent command to be sent to a corresponding device in the first group after the corresponding device in the first group is inventoried.

45. The core network device of any one of claims 42 to 44, wherein the second communication unit is configured to receive the first information sent by an application server.

46. The core network device of any one of claims 42 to 45, wherein the second communication unit is configured to perform one of:
sending the first information to a first access network device; or
sending the first information to a first device.

47. The core network device of any one of claims 42 to 46, wherein the second communication unit is configured to: receive an identifier of a second device, wherein the second device is one of the one or more devices in the first group; and send the identifier of the second device to an application server.

48. The core network device of claim 47, wherein the second communication unit is configured to: receive a command corresponding to the second device sent by the application server; and send the command corresponding to the second device.

49. The core network device of claim 46, wherein the first device is a second access network device or a terminal.

50. The core network device of any one of claims 42 to 49, wherein each of the one or more devices in the first group is an Ambient power-enabled IoT (AIoT) device.

51. A first device comprising: a transceiver, a processor and a memory, wherein the memory is configured to store a computer program, the transceiver is configured to communicate with other devices, and the processor is configured to invoke and execute the computer program stored in the memory to cause the first device to perform the method of any one of claims 1 to 16.

52. A core network device comprising: a transceiver, a processor and a memory, wherein the memory is configured to store a computer program, the transceiver is configured to communicate with other devices, and the processor is configured to invoke and execute the computer program stored in the memory to cause the core network device to perform the method of any one of claims 17 to 25.

53. A chip comprising: a processor configured to invoke and execute a computer program from a memory to cause a device on which the chip is mounted to perform the method of any one of claims 1 to 16, or any one of claims 17 to 25.

54. A computer-readable storage medium for storing a computer program that, when executed by a device, causes the device to perform the method of any one of claims 1 to 16, or any one of claims 17 to 25.

55. A computer program product comprising computer program instructions that cause a computer to perform the method of any one of claims 1 to 16, or any one of claims 17 to 25.

56. A computer program that causes a computer to perform the method of any one of claims 1 to 16, or any one of claims 17 to 25.
